# EUROPÄISCHE PATENTSCHRIFT

(11) **EP 2 965 930 B1**
(45) Veröffentlichungstag und Bekanntmachung des Hinweises auf die Patenterteilung: **21.11.2018**
(21) Anmeldenummer: 15175995.8
(22) Anmeldetag: 09.07.2015
(51) Int. Cl.: B60G 99/00, B62D 33/06, B60G 17/052, B60G 17/08, B60G 17/016, B60G 17/017, B60G 17/018

(54) **STEUERGERÄT FÜR EINE DRUCKLUFTANLAGE EINES NUTZFAHRZEUGS**
CONTROL DEVICE FOR A PRESSURISED AIR ASSEMBLY OF A COMMERCIAL VEHICLE
APPAREIL DE COMMANDE POUR UNE INSTALLATION A AIR COMPRIME D'UN VEHICULE UTILITAIRE

(30) Priorität: 09.07.2014 DE 102014109593
(43) Veröffentlichungstag der Anmeldung: 13.01.2016
(73) Patentinhaber: Haldex Brake Products Aktiebolag, 261 24 Landskrona (SE)
(72) Erfinder: Heer, Siegfried, 69168 Wiesloch (DE)
(74) Vertreter: REHBERG HÜPPE + PARTNER

(56) Entgegenhaltungen:
- EP-A2- 1 987 970
- WO-A1-2014/046601
- DE-A1-102005 005 723
- DE-A1-102005 012 673
- DE-A1-102007 048 194
- DE-A1-102007 050 170
- DE-B4- 10 360 875

## Beschreibung

### TECHNISCHES GEBIET DER ERFINDUNG

Die Erfindung betrifft ein Steuergerät für eine Druckluftanlage eines Nutzfahrzeugs, eine Druckluftanlage eines Nutzfahrzeugs mit einem derartigen Steuergerät sowie ein Verfahren zum Betrieb einer Druckluftanlage eines Nutzfahrzeugs.

### STAND DER TECHNIK

Moderne Nutzfahrzeuge verfügen einerseits über eine Chassis-Luftfederungsanlage sowie andererseits über eine Kabinen-Luftfederanlage, welche in einer Druckluftanlage pneumatisch miteinander verbunden oder pneumatisch entkoppelt ausgebildet sein können.

Hierbei dient die Chassis-Luftfederungsanlage der Steuerung oder Regelung eines konstanten oder variierenden Niveaus des Chassis gegenüber der Fahrbahn, was quasistationär, beispielsweise für das Be- und Entladen, und/oder dynamisch während der Fahrt des Nutzfahrzeugs beim Beschleunigen, Bremsen und Kurvenfahrt zwecks Vermeidung unerwünschter Rollbewegungen, Nickbewegungen oder Gierbewegungen des Chassis der Fall sein kann. Die Steuerung oder Regelung der Chassis-Luftfederungsanlage erfolgt über die Veränderung der Beaufschlagung von Luftfederbälgen, welche zwischen eine Achse des Nutzfahrzeugs und/oder Rädern des Nutzfahrzeugs und dem Chassis angeordnet sind, und/oder Verstellung von Dämpfern, welche zwischen Rädern und Chassis oder Achse und Chassis wirken. Des Weiteren ist eine Steuerung oder Regelung einer Chassis-Luftfederungsanlage erforderlich zwecks Anpassung des Niveaus an eine Rampe zum Be- und Entladen, was automatisch oder durch manuelle Steuerung durch den Fahrer erfolgen kann.

Mittels der Kabinen-Luftfederungsanlage ist die Kabine des Nutzfahrzeugs mit Luftfederbälgen und Dämpfern gegenüber dem Chassis abgestützt. Die Steuerung oder Regelung der Kabinen-Luftfederungsanlage erfolgt bspw. mit dem Ziel, die Kabine zum Ein- und Aussteigen abzusenken, das Niveau der Kabine von der Beladung und dem Gewicht der in der Kabine angeordneten Personen unabhängig zu gestalten und dynamische Bewegungen der Kabine, insbesondere eine Nickbewegung, eine Rollbewegung und eine Gierbewegung der Kabine, zumindest zu reduzieren.

### a) Bekannte Chassis-Luftfederungsanlagen

EP 0 520 148 B1 offenbart eine Chassis-Luftfederungsanlage, in welcher eine als Vorratsbehälter ausgebildete Druckluftquelle über eine Niveauregelventilbaugruppe und eine Hebe-Senk-Ventilbaugruppe pneumatisch mit das Chassis abstützenden Luftfederbälgen verbunden ist. Die Niveauregelventilbaugruppe wird automatisch durch mechanische Betätigung entsprechend einer Veränderung des Niveaus des Chassis in eine Belüftungsstellung, eine Sperrstellung oder eine Entlüftungsstellung gesteuert. Die Niveauregelventilbaugruppe wird eingesetzt, um während des Fahrbetriebs eine Soll-Niveauhöhe vorzugeben und beizubehalten. Über die Hebe-Senk-Ventilbaugruppe kann der Fahrer für ruhendes Fahrzeug willkürlich das Niveau verändern, also das Chassis heben oder senken, was beispielsweise zur Anpassung an eine Rampe für Be- und Entladevorgänge erfolgt. Hierzu besitzt die Hebe-Senk-Ventilbaugruppe einen Wählhebel, welcher mit einer Schaltwelle um eine Rotationsachse verschwenkt werden kann zwischen Schwenkstellungen Heben, Senken und Stop. Die Schaltwelle trägt Nocken, über welche abhängig vom Rotationswinkel der Schaltwelle und des Wählhebels Stößel betätigt werden können, die wiederum Ein- und Auslassventile betätigen. In der Stellung Heben wird ein Einlassventil geöffnet, welches einen Anschluss der Hebe-Senk-Ventilbaugruppe, der unter Umgehung der Niveauregelventilbaugruppe mit der Druckluftquelle verbunden ist, mit einem Ausgang zu den Luftfederbälgen verbindet. Hingegen wird in der Stellung Senken ein Auslassventil geöffnet, welches den zu den Luftfederbälgen führenden Ausgang entlüftet. In der zwischen den Stellungen Heben und Senken angeordneten Stellung Stop sind die zuvor genannten Einlass- und Auslassventile geschlossen, so dass der Druck an den Luftfederbälgen konstant gehalten wird. In der Hebe-Senk-Ventilbaugruppe ist eine sogenannte Totmann-Feder eingesetzt, welche als Torsionsfeder ausgebildet ist. Die Totmann-Feder führt den Wählhebel mit Schaltwelle von einer manuell herbeigeführten Stellung Heben oder Senken zurück in die Stellung Stop, wenn der Fahrer keine Kräfte mehr auf den Wählhebel aufbringt. Die Hebe-Senk-Ventilbaugruppe besitzt darüber hinaus einen pneumatischen Steueranschluss, welcher in einen Druckraum mündet. Der Druckraum ist von einem Steuerkolben begrenzt, der durch eine Stirnseite der Schaltwelle gebildet ist. Durch Vorgabe eines pneumatischen Steuerdrucks in dem Druckraum kann eine Axialverschiebung der Schaltwelle mit Wählhebel herbeigeführt werden, welche zur Folge hat, dass bei geschlossenem Einlassventil und geschlossenem Auslassventil ein Verbindungsventil geöffnet wird. Für geöffnetes Verbindungsventil ist die Niveauregelventilbaugruppe über die Hebe-Senk-Ventilbaugruppe mit den Luftfederbälgen verbunden, so dass automatisch über die Niveauregelventilbaugruppe der Druck in den Luftfederbälgen und damit das Niveau geregelt werden kann. Die durch pneumatische Druckbeaufschlagung des Druckraums herbeigeführte Stellung entspricht einer Stellung Fahrt, welche über eine Steuereinheit mit entsprechender Ansteuerung eines Magnetventils und derart ausgesteuerten Steuerdruck automatisch eingenommen wird, wenn sich das Fahrzeug in Bewegung setzt und beispielsweise eine Grenzgeschwindigkeit überschritten wird. Diese Luftfederungsanlage basiert auf einer pneumatischen Reihenschaltung der Hebe-Senk-Ventilbaugruppe, der Niveauregelventilbaugruppe und der Luftfederbälge (mit den genannten Umgehungsmöglichkeiten). Hierbei erfolgt eine rein mechanische Niveauregelung mit manuellen Eingriffsmöglichkeiten über die Hebe-Senk-Ventilbaugruppe.

Gemäß EP 1 382 469 A2 sind zwischen eine Druckluftquelle und das Chassis abstützenden Luftfederbälgen ein 2/2-Wegeventil in Ausbildung als Sperrventil sowie ein 3/2-Wegeventil in Ausbildung als Be- und Entlüftungsventil zwischengeschaltet. Hierbei können die beiden genannten Ventile sowohl direkt über zugeordnete Elektromagnete durch eine Steuereinheit elektrisch für eine elektrische Niveauregelung betätigt werden als auch direkt manuell betätigt werden über jeweils einen den Ventilen zugeordneten Stößel, um manuell ein Heben oder Senken zu verursachen.

DE 199 44 873 C1 offenbart eine Chassis-Luftfederungsanlage, bei welcher in parallelen Leitungszweigen in einem ersten Leitungszweig eine mechanisch angesteuerte Niveauregelventilbaugruppe angeordnet ist und in einem zweiten Leitungszweig eine rein elektrisch angesteuerte Niveauregelventilbaugruppe angeordnet ist. Die mechanische Niveauregelventilbaugruppe in dem ersten Leitungszweig besitzt einen Niveausensor, dessen Ausgangssignal einer Steuereinheit zugeführt wird, welche, auch auf Grundlage dieses Niveausignals, die rein elektrisch angesteuerte Niveauregelventilbaugruppe in dem anderen Leitungszweig ansteuert. Die Steuereinheit steuert auch ein in dem ersten Leitungszweig angesteuertes Sperrventil an, über welches dieser erste Leitungszweig absperrbar ist, wenn die rein elektronische Niveauregelung in dem zweiten Leitungszweig erfolgt. In einer weiteren Ausführungsform dieser Druckschrift ist eine Druckluftquelle über eine mechanische Niveauregelventilbaugruppe, eine Hebe-Senk-Ventilbaugruppe, ein Wechselventil und eine rein elektrisch angesteuerte Niveauregelventilbaugruppe in Reihenschaltung mit Luftfederbälgen verbunden. Hier kann der Fahrer manuell Einfluss auf das Niveau der Chassis-Luftfederungsanlage sowohl über die Hebe-Senk-Ventilbaugruppe als auch über einen elektrischen Wahlschalter nehmen, über welchen ebenfalls ein manuell verursachtes Heben und Senken bei ordnungsgemäßer Spannungsversorgung über die rein elektronische Niveauregelventilbaugruppe veranlasst werden kann.

Die Druckschrift DE 199 16 040 B4 offenbart eine Chassis-Luftfederungsanlage, bei welcher zwischen die Druckluftquelle und die hier zweikreisigen, das Chassis abstützenden Luftfederbälge eine Niveauregelventilbaugruppe zwischengeschaltet ist. Die Niveauregelventile der Niveauregelventilbaugruppe sind hierbei elektrisch und pneumatisch über eine manuell betätigte Hebe-Senk-Ventilbaugruppe steuerbar. Die Ansteuereinheiten der Niveauregelventile erzeugen gemäß dem hierfür verwendeten DIN-Symbol einen Steuerdruck für einen Steuerkolben des Niveauregelventils unter Einsatz eines elektrisch gesteuerten elektropneumatischen Vorsteuerventils aus einem Druck, welcher der Steuereinheit von der Hebe-Senk-Ventilbaugruppe zugeführt wird.

EP 1 687 159 B1 offenbart die parallele Anordnung eines ausschließlich durch eine Steuereinheit elektrisch betätigten Leitungszweigs mit einer Niveauregelventilbaugruppe mit einem Be- und Entlüftungsventil in Ausbildung als 3/2-Magnetventil sowie mit einem Sperrventil in Ausbildung als 2/2-Magnetventil sowie eines Leitungszweigs mit einer Hebe-Senk-Ventilbaugruppe mit zwei manuell betätigbaren Ventilen, nämlich einem Be- und Entlüftungsventil in Ausbildung als 3/2-Wegeventil sowie einem Sperrventil in Ausbildung als 2/2-Wegeventil. Für eine weitere Ausführungsform dieser Druckschrift werden die Ventile der Niveauregelventilbaugruppe rein pneumatisch angesteuert, wobei der Steuerdruck durch eine Reihenschaltung eines durch die Steuereinheit elektrisch angesteuerten 3/2-Magnetventils sowie eines rein manuell angesteuerten 3/2-Wegeventils vorgegeben wird, so dass sowohl eine elektrisch als auch manuelle Beeinflussung ein- und desselben Steuerdrucks möglich ist. Druckluft gelangt hiervon einem Vorratsbehälter über die manuell betätigten 3/2-Wegeventile ausschließlich über die elektrisch betätigten 3/2-Magnetventile zu dem jeweiligen Steueranschluss der Niveauregelventile.

EP 1 687 160 B1 offenbart (zusätzlich zu Ausführungsformen entsprechend EP 1 687 159 B1) eine Ausführungsform, bei welcher ein Vorratsbehälter in pneumatische Reihenschaltung über ein Sperrventil und ein Be- und Entlüftungsventil mit Luftfederbälgen verbunden ist. Sowohl das Sperrventil als auch das Be- und Entlüftungsventil sind alternativ manuell über Betätigungsstößel sowie rein elektrisch über von einer Steuereinheit elektrisch angesteuerten Magnet-Aktuatoren angesteuert.

EP 2 070 741 B1 offenbart eine Hebe-Senk-Ventilbaugruppe, die neben der manuellen Betätigung auch elektropneumatisch gesteuert von einer Durchlassstellung in eine Sperrstellung überführbar ist. Während für bewegtes Fahrzeug und Hebe-Senk-Ventilbaugruppe in der Durchlassstellung die Niveauregelung aktiviert ist und somit ein Anheben, Konstanthalten und Absenken des Niveaus je nach Überführung des Niveauregelventils in eine Belüftungsstellung, Sperrstellung und Entlüftungsstellung möglich ist, wird durch automatisierte Umschaltung der Hebe-Senk-Ventilbaugruppe in die Sperrstellung die automatische Niveauregelung deaktiviert. Diese Deaktivierung der Niveauregelung wird gezielt entsprechend einer Beschleunigung des Anhängers eingesetzt. Beispielsweise kann die Niveauregelung deaktiviert werden, wenn es zu einem Nicken des Fahrzeugs bei einem Bremsvorgang oder zu Einfederungen infolge einer Querbeschleunigung bei einer Kurvenfahrt kommt. Würde keine Deaktivierung der Niveauregelung durch die Steuereinheit erfolgen, würden durch die jeweilige Beschleunigung verursachte Ein- und Ausfedervorgänge der Luftfederbälge zu unnötigen Niveauregelaktionen mit einem erhöhten Druckluftverbrauch führen.

DE 10 2011 051 503 A1 offenbart eine Chassis-Luftfederungsanlage, bei welcher die das Chassis abstützenden Luftfederbälge durch Niveauregelventile belüftet, abgesperrt und entlüftet werden können, wobei die Niveauregelventile pneumatisch vorgesteuert sind. Die pneumatische Vorsteuerung erfolgt hier über zwei alternative Vorsteuerpfade, nämlich einen von einer Steuereinheit elektronisch gesteuerten oder geregelten Vorsteuerpfad, in welchem die Steuereinheit vorsteuernde Magnetventile steuert oder regelt, sowie einen manuellen Vorsteuerpfad, über welchen der Fahrer mittels manuell betätigter Vorsteuerventile ein Heben und Senken des Chassis herbeiführen kann.
DE 103 33 610 A1 offenbart die Integration einer Chassis-Luftfederungsanlage, welche hier auch eine Liftachse beinhalten kann, in eine Druckluftaufbereitungseinrichtung, welche einer Trocknung von von einem Kompressor zugeführter Druckluft, einer Druckregelung, der Verteilung der Druckluft auf verschiedene Verbraucherkreise, der Ermöglichung einer Regeneration der Lufttrocknungskartusche, der Steuerung einer Befüllungsreihenfolge der Verbraucherkreise, der Drucksicherung über Mehrkreisschutzventile und der Ermöglichung einer Querspeisung zwischen einzelnen Verbraucherkreisen dient.
WO 2014/046601 A1 offenbart eine Chassis-Luftfederungsanlage. Für geparktes Nutzfahrzeug, insbesondere zum Be- und Entladen des Nutzfahrzeugs, wird vorgeschlagen, die Neigung des Chassis, einer Fahrerkabine oder einer Ladebordwand über einen Neigungssensor zu erfassen und eine Regelung der Chassis-Luftfederungsanlage derart vorzunehmen, dass die Fahrerkabine, das Chassis oder die Ladebordwand horizontal ausgerichtet ist. Das Dokument WO2014/046601 A1 offenbart den Oberbegriff der Ansprüche 1 und 12.

### b) Stand der Technik zu Kabinen-Luftfederungsanlagen

DE 10 2009 046 290 B3 beschreibt ein Kabinenluftfedermodul, welches zwischen ein Chassis und eine Kabine eines Nutzfahrzeugs zwischengeordnet ist. Das Kabinenluftfedermodul bildet hierbei einen Luftfederbalg aus. In das Kabinenluftfedermodul ist eine Ventileinrichtung integriert, welche je nach Ein- und Ausfederung des Luftfederbalges auf Grundlage einer mechanischen Wegsteuerung eine Be- und Entlüftung des Luftfederbalges bewirkt, um möglichst ein konstantes Niveau des Luftfederbalgs und damit der Kabine über dem Chassis zu gewährleisten.
Aus US 6,000,703 A ist eine Chassis-Luftfederungsanlage eines Arbeitsfahrzeugs wie eines Traktors bekannt. Optional kann auch eine Luftfederung für einen innerhalb der Kabine angeordneten Sitz vorgesehen sein. Zwischen der Kabine und dem Chassis sind mehrere Luftfederbälge vorgesehen, wobei jedem Luftfederbalg eine Kombination aus einem hydraulischen Aktuator und einem Isolator zur Dämpfung von hochfrequenten Schwingungen parallelgeschaltet ist. Dabei tragen die Luftfederbälge einen statischen Anteil des Gewichts der Kabine, während über die Kombination aus dem Aktuator und dem Isolator eine dynamischer Anteil des Gewichts der Fahrerkabine abgestützt werden soll. Zur Steuerung der Befüllung der Luftfederbälge ist für jeden Luftfederbalg ein elektrisch gesteuertes Magnetventil vorgesehen. Die Steuerung erfolgt dabei mittels einer Steuereinheit unter Berücksichtigung der erfassten, auf den Luftfederbalg wirkenden statischen Last und ggf. eines an dem Luftfederbalg erfassten Drucks. Die Betätigung des Aktuators wird ebenfalls über ein von der Steuereinheit elektrisch gesteuertes Magnetventil gesteuert, wobei die Steuerung in Abhängigkeit von Bodenunebenheiten, einer Auslenkung der Fahrerkabine, einer Neigung und/oder einer Beschleunigung erfolgen kann.

Aus DE 10 2007 048 194 A1 ist eine Kabinen-Luftfederungsanlage bekannt, in welcher auch eine Steuerung der Luftfederung eines Sitzes in Abhängigkeit von der Steuerung der Luftfederung zwischen Kabine und Chassis erfolgt. Zur Steuerung der Be- und Entlüftung der Luftfederbälge ist eine Steuereinheit vorgesehen, die in Abhängigkeit von Signalen von Positionssensoren und Beschleunigungssignalen Magnetventile steuert, um Zusatzvolumen aus Zusatzvolumentanks in die Luftfederbälge weiterzuleiten.

EP 1 584 545 B1 beschäftigt sich mit der Abstützung einer Kabine eines Nutzfahrzeugs, welche einen Ruheraum für Ruhe- oder Übernachtungspausen des Fahrers beinhaltet. In einer Parksituation des Nutzfahrzeugs soll die Kabine unabhängig von einer etwaigen Neigung der Fahrbahn annähernd horizontal ausgerichtet sein, um das Ruhen oder Übernachten des Fahrers zu ermöglichen. Schwankungen der Kabine, insbesondere infolge der Bewegung des Fahrers in der Kabine, infolge des Windes und/oder infolge des Fahrtwindes von vorbeifahrenden Fahrzeugen, sollen vermieden werden. Vorgeschlagen wird, dass das Nutzfahrzeug einerseits mit einer elektronisch gesteuerten Chassis-Luftfederungsanlage (sogenannte "*Electronically Controlled Air Suspension*", kurz ECAS) ausgestattet ist, bei welcher ein Steuergerät des ECAS-Systems Luftfederbälge der Chassis-Luftfederanlage steuert. Die Beaufschlagung von Luftfederbälgen der Kabinen-Luftfederungsanlage wird durch eine weitere Steuereinheit und von dieser angesteuerte Magnetventile gesteuert. In der Kabinen-Luftfederungsanlage findet auch ein mechanischer Stabilisator sowie Stoßdämpfer mit verstellbarer Dämpfungscharakteristik, insbesondere sogenannte CDC-Dämpfer, Einsatz. Mittels der Steuereinheit der Kabinen-Luftfederungsanlage soll auch eine Schwingungsregelung der Kabine erfolgen zwecks Vermeidung von Nickschwingungen bei dem Beschleunigen und Verzögern des Nutzfahrzeugs, Wank- oder Rollbewegungen u. ä. In der Parksituation erfolgt die Herbeiführung der horizontalen Ausrichtung der Kabine einerseits dadurch, dass das Chassis durch das Steuergerät des ECAS-Systems um die Querachse horizontal ausgerichtet wird, indem die Beaufschlagung einer Hinterachsaufhängung und/oder Vorderachsaufhängung gesteuert wird, während eine horizontale Ausrichtung um eine Fahrzeuglängsachse mittels einer Verstellung der Luftfederbälge der Kabinen-Luftfederungsanlage unter Steuerung durch das Steuergerät der Kabinen-Luftfederungsanlage erfolgt. Das Steuergerät der Chassis-Luftfederungsanlage bzw. des ECAS-Systems und das Steuergerät der Kabinen-Luftfederungsanlage kommunizieren über einen CAN-Bus miteinander. Auch vorgeschlagen wird, zur Verbesserung einer Wankstabilisierung die Chassis-Luftfederungsanlage durch vollständige Entlüftung der Luftfederbälge auf einen Achsanschlag abzusenken. Des Weiteren wird vorgeschlagen, in der Parksituation die Dämpfung eines Dämpfers zu maximieren, um Bewegungen der Kabine zu minimieren. Ebenfalls vorgeschlagen wird, dass mechanische Verriegelungen der Kabine mit dem Chassis zugeschaltet werden. Um auch während eines Fahrbetriebs in der Kabinen-Luftfederungsanlage eine Reduzierung eines Nickens oder Wankens zu ermöglichen, kann die Kabinen-Luftfederungsanlage das Signal eines Beschleunigungssignals auswerten und auf Grundlage der Auswertung die Dämpfung der Dämpfer der Kabinen-Luftfederungsanlage verändern. Ebenfalls möglich ist die Berücksichtigung eines Gierratensensors und/oder eines Neigungssensors. Für eine vereinfachte Steuerung wird eine Ansteuerung der Luftfederbälge der Kabinen-Luftfederungsanlage auf Grundlage der Signale eines Geschwindigkeitssensors und/oder eines Lenkwinkelsensors unter Berücksichtigung eines Kennfeldes vorgenommen.

DE 103 60 875 B4 betrifft die Integration einer Luftfederungselektronik in ein elektronisches Bremssystem. Hierbei sollen die Steuerungsprogramme des Luftfederungssystems einerseits und des elektronischen Bremssystems andererseits mit einer Logikstruktur ausgestattet sein, die derart voneinander entkoppelt sind, dass die beiden Steuerungsprogramme (beispielsweise bei einem Software-Update) für sich geändert werden können, womit das Luftfederungssystem einerseits und das elektronische Bremssystem andererseits softwareseitig weitgehend autark sein sollen. Mit einer Kabinen-Luftfederungsanlage beschäftigt sich dieses Patent nicht.

DE 10 2005 012 673 A1 betrifft ein Nutzfahrzeug, bei welchem ein Fahrzeugrahmen über eine Chassis-Luftfederungsanlage gegenüber den Fahrzeugachsen abgestützt ist, während eine Fahrerkabine über eine Kabinen-Luftfederungsanlage gegenüber dem Fahrzeugrahmen abgestützt ist. Eine Steuerung oder Regelung der beiden Luftfederungsanlagen soll beispielsweise zu dem Zweck erfolgen, bei einem Stillstand des Nutzfahrzeugs auf einem geneigten Untergrund für eine Ruhe- oder Übernachtungspause die Fahrerkabine horizontal auszurichten oder bei Windböen oder Windeinflüssen vorbeifahrender Fahrzeuge ein Schwanken der Fahrerkabine zu vermeiden. Mittels separater Wegsensoren und/oder Neigungssensoren werden Niveau- und/oder Neigungsänderungen einerseits des Fahrzeugrahmens und andererseits der Fahrerkabine erfasst. Zur Lösung der Aufgabe, auf möglichst einfache Weise mit geringem Sensor- und Rechenaufwand einen effektiven Steuer- bzw. Regelalgorithmus zu schaffen, erfolgt die unabhängige Ansteuerung oder Regelung der Kabinen-Luftfederungsanlage einerseits und der Chassis-Luftfederungsanlage andererseits mit dem Ziel, für die beiden Luftfederungsanlagen jeweils ein Soll-Niveau und/oder eine Soll-Neigung herbeizuführen. Hierbei kann mittels einer zentralen Steuereinrichtung eine gemeinsame Ansteuerung sowohl von Luftfederbälgen (und Dämpfungselementen) zwischen Fahrerkabine und Fahrzeugrahmen als auch von Luftfederbälgen (und Dämpfungselementen) zwischen Fahrzeugrahmen und Fahrzeugachsen erfolgen, wobei je nach gewünschte Ausführungsvariante alle diese Elemente oder auch nur Teile davon variabel angesteuert werden.

Die nicht gattungsgemäße Druckschrift DE 10 2007 050 170 A1 betrifft ein Kraftfahrzeug, bei welchem über konventionelle Fahrwerks-Federn ein Aufbau gegenüber Fahrzeugrädern oder Achsen abgestützt ist. An dem Aufbau ist, wiederum über konventionelle Fahrerkabinen-Federn, eine Fahrerkabine abgestützt. Den Fahrwerks-Federn und den Fahrerkabinen-Federn sind jeweils Fahrwerk-Dämpfungselemente und Fahrerkabinen-Dämpfungselemente parallelgeschaltet, deren wirksame Dämpfung durch eine gemeinsame Steuerelektronik verändert werden kann. Der Steuerelektronik werden das Fahrzeugniveau beschreibende Niveaugrößen, Zusatzstandsdaten des Bremssystems wie ein Bremspedalbetätigungssignal, das Bremsmoment oder ein Bremsdruck, das Antriebsmoment des Fahrzeugmotors, die Fahrzeuglängsgeschwindigkeit, Raddrehzahlen der Fahrzeugräder, ein Schaltzustand der Kupplung oder des Fahrzeuggetriebes und/oder ein Lenkwinkel als Messdaten zugeführt. Über einen Zustandsbeobachter können Zustandsgrößen wie eine die Nickbewegung beschreibende Nickgröße, eine die Wankbewegung beschreibende Wankgröße, eine die Hubbewegung beschreibende Hubgröße, eine die Querdynamik beschreibende Querdynamikgröße wie die Querbeschleunigung oder die Gierrate und/oder die Fahrzeuglängsbeschleunigung abgeschätzt werden. Auf dieser Grundlage erfolgt dann durch die Steuerelektronik eine Abstimmung der Fahrwerk-Dämpfungselemente und der Fahrerkabinen-Dämpfungselemente. Hierbei können Stellgrößen für die Fahrerkabinen-Dämpfungselemente aus Fahrzeugdaten für die Fahrwerk-Dämpfungselemente ermittelt werden.

### AUFGABE DER ERFINDUNG

Der vorliegenden Erfindung liegt die Aufgabe zugrunde, ein Steuergerät für eine Druckluftanlage eines Nutzfahrzeugs, eine Druckluftanlage und ein Verfahren zum Betrieb einer Druckluftanlage vorzuschlagen, welches oder welche über erweiterte Eingriffsmöglichkeiten für die Steuerung oder Regelung des statischen und/oder dynamischen Niveaus des Chassis und/oder der Kabine des Nutzfahrzeugs verfügt.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung beruht auf der Erkenntnis, dass es vorteilhaft ist, wenn ein einziges Steuergerät sowohl für die Steuerung oder Regelung einer Chassis-Luftfederungsanlage als auch für die Steuerung oder Regelung eines Kabinen-Luftfederungsanlage zuständig ist:
- Gegenüber der Verwendung von zwei Steuergeräten führt die Verwendung eines einzigen multifunktionalen Steuergerätes zu einer Reduzierung der Zahl der Bauelemente, des Bauvolumens, des Montageaufwandes und/oder der Kosten.
- Ohne dass hierdurch die Erfindung beschränkt werden soll, kann zum Zwecke der Vereinfachung das Nutzfahrzeug stark vereinfacht als Feder-Masse-Dämpfer-System mit einem vertikalen Freiheitsgrad betrachtet werden, bei welchem die Masse von der Masse des Fahrzeugaufbaus (ggf. einschließlich einer Beladung) gebildet ist und die Federsteifigkeit und Dämpfung von der Chassis-Luftfederungsanlage bereitgestellt ist. Mit diesem Feder-Masse-Dämpfer-System ist ein weiteres vertikales Feder-Masse-Dämpfer-System gekoppelt, welches ebenfalls einen vertikalen Freiheitsgrad besitzt, die Abstützung der Kabine an dem Chassis abbildet und bei welchem die Masse mit der Masse der Kabine (ggf. einschließlich einer Beladung mit dem Fahrergewicht) und die Feder von den Luftfederbälgen der Kabinen-Luftfederungsanlage gebildet ist und der Dämpfer eine Dämpfungswirkung der Kabinen-Luftfederungsanlage beschreibt. Das derart gebildete System bildet somit insgesamt ein Schwingungssystem mit zwei Massen und zwei Freiheitsgraden, welches sich aus einem Chassis-Teilschwingungssystem und einem Kabinen-Teilschwingungssystem zusammensetzt. Erfolgt durch zwei Steuergeräte die separate Steuerung oder Regelung für die beiden genannten Teilschwingungssysteme, ergibt sich zumindest in einigen Teilbetriebsbereichen eine suboptimale Steuerung oder Regelung. Dieses soll anhand eines Beispiels erläutert werden, ohne dass dieses Beispiel die Erfindung einschränken soll:

Überfährt das Nutzfahrzeug mit den Rädern eine Fahrbahnunebenheit, welche idealisiert und ebenfalls vereinfacht als Stufe angesehen werden kann, führt dies zu einer transienten Schwingung des Chassis-Teilschwingungssystems, deren Ausmaß durch die Steuerung oder Regelung der Chassis-Luftfederungsanlage allenfalls reduziert wird. Ursache hierfür ist beispielsweise, dass bei dem Überfahren der Fahrbahnunebenheit die Chassis-Luftfederungsanlage nicht so schnell be- und entlüftet werden kann, dass trotz der Fahrbahnunebenheit die Niveauhöhe unverändert bleibt. Hierfür verantwortlich ist einerseits die begrenzte Schnelligkeit der Steuerung oder Regelung einer Steuereinheit und andererseits eine Begrenzung der Be- und Entlüftungsquerschnitte. Verbleibende Schwingungen des Chassis-Teilschwingungssystems pflanzen sich dann aber fort zu dem Kabinen-Teilschwingungssystem, welches somit ebenfalls Schwingungen ausgesetzt ist. Wünschenswert wäre, dass eine derartige Anregung von Schwingungen des Kabinen-Teilschwingungssystems gänzlich vermieden werden. Erschwerend kann hinzukommen, dass je nach Auslegung der unterschiedlichen Steuerungen oder Regelungen einerseits der Chassis-Luftfederungsanlage und andererseits der Kabinen-Luftfederungsanlage die Aktionen der beiden Steuerungen oder Regelungen schlimmstenfalls zu einer Instabilität führen können. Schließlich kann es infolge der Schwingungen des Kabinen-Teilschwingungssystems zur Ausübung von Kräften durch das Kabinen-Teilschwingungssystem auf das Chassis-Teilschwingungssystem kommen, welche die Steuerung oder Regelung der Chassis-Luftfederungsanlage beeinträchtigen oder von dieser berücksichtigt werden müssen.
- Selbst wenn ein Steuergerät zur Steuerung oder Regelung einer Chassis-Luftfederungsanlage und ein Steuergerät zur Steuerung oder Regelung einer Kabinen-Luftfederungsanlage über ein Bussystem miteinander kommunizieren, führt die Kommunikation der Steuergeräte und die Verarbeitung der zwischen den Steuergeräten ausgetauschten Signale zu einer Zeitverzögerung, welche (selbst wenn diese nur im Bereich von Millisekunden liegt) nachteilig für die Steuerungs- oder Regelungsgüte ist.

Vor diesem Hintergrund schlägt die Erfindung ein Steuergerät vor, welches sowohl mit Steuerlogik zur Steuerung oder Regelung einer Chassis-Luftfederungsanlage für eine Abstützung eines Chassis des Nutzfahrzeugs als auch mit Steuerlogik zur Steuerung oder Regelung einer Kabinen-Luftfederungsanlage für eine Abstützung einer Fahrerkabine des Nutzfahrzeugs ausgestattet ist. Hierbei können die genannten Steuerlogiken Bestandteil einer einzigen Software sein. Möglich ist auch, dass die genannten Steuerlogiken auf dem Steuergerät parallelisiert sind oder auf Teilprozessoren des Steuergeräts ausgeführt werden. Möglich ist, dass durch die Verwendung des einen multifunktionalen Steuergeräts Komponenten wie eine Spannungsversorgung, Kommunikationstreiber, Sensorauswerteschaltungen u. ä. sowohl für die Steuerung oder Regelung der Chassis-Luftfederungsanlage als auch die Steuerung oder Regelung der Kabinen-Luftfederungsanlage genutzt werden. Möglich ist auch, dass trotz der Zusammenfassung der beiden Steuerlogiken in einem Steuergerät die Steuerlogiken derart voneinander entkoppelt sind, dass die beiden Steuerlogiken für sich geändert werden können, was vorteilhaft ist für einen etwaigen Softwareupdate. Im Extremfall können die beiden Steuerlogiken softwareseitig weitgehend autark ausgebildet sein.

Erfindungsgemäß sind die Steuerungen oder Regelungen der Chassis-Luftfederungsanlage und der Kabinen-Luftfederungsanlage derart miteinander koordiniert, dass die Steuerungs- oder Regelungsmaßnahmen der Chassis-Luftfederungsanlage einerseits und der Kabinen-Luftfederungsanlage andererseits nicht unabhängig voneinander bestimmt werden, sondern diese vielmehr gegenseitig voneinander abhängig sind oder sich gegenseitig beeinflussen. Möglich ist, dass durch die beiden Steuerlogiken in dem Steuergerät das Chassis-Teilschwingungssystem und das Kabinen-Teilschwingungssystem gemeinsam als ein Gesamt-Schwingungssystem betrachtet werden mit den beiden Eingriffsmöglichkeiten durch die Steuerlogiken an der Chassis-Luftfederungsanlage und der Kabinen-Luftfederungsanlage, wobei dann in dem Gesamt-Schwingungssystem auch die zuvor erläuterten Wechselwirkungen zwischen den Teilschwingungssystemen berücksichtigt werden können. Dies soll anhand des folgenden, stark vereinfachenden und die Erfindung nicht beschränkenden Beispiels erläutert werden:

Wird eine Fahrbahnunebenheit überfahren mit einer Änderung der Fahrbahnhöhe von 5 cm/sec und führt die Steuerung oder Regelung der Chassis-Luftfederungsanlage lediglich zu einer maximalen Änderungsgeschwindigkeit von 3 cm/sec, kann es vorteilhaft sein, zusätzlich zur Steuerung oder Regelung der Chassis-Luftfederungsanlage auch die Kabinen-Luftfederungsanlage derart anzusteuern oder zu regeln, dass sich eine Änderung des Niveaus der Kabine über dem Chassis ergibt mit einer Änderungsgeschwindigkeit von 2 cm/sec. Auch wenn somit das Chassis mit dem Überfahren der Fahrbahnunebenheit seine Höhe mit einer Änderungsgeschwindigkeit von 2 cm/sec verändert, kann diese unzureichende Steuerung oder Regelung der Chassis-Luftfederungsanlage von der Kabine ferngehalten werden durch die koordinierte Steuerung oder Regelung der Kabinen-Luftfederungsanlage, womit dann trotz der nicht vollständigen Ausreglung der Niveauänderung des Chassis die Kabine die erforderliche Niveauänderung erfährt, womit die unvermeidbaren Schwankungen des Chassis von der Kabine und damit dem Fahrer ferngehalten werden. (Dem Fachmann wird ersichtlich sein, dass die zuvor genannte Erläuterung stark vereinfachend ist und auf einer an sich unzutreffenden statischen Betrachtung basiert, während u. U. eine tatsächliche Koordinierung der Steuerungen oder Regelungen eine dynamische Betrachtung erfordert, welche u. U. auch eine komplexe Abbildung der Vorgänge mit Ersatzmodellen oder Übertragungsverhalten erfordert.) Somit kann erfindungsgemäß durch die Koordinierung der Steuerungen oder Regelungen der Chassis-Luftfederungsanlage und der Kabinen-Luftfederungsanlage eine Verbesserung der Steuerungs- oder Regelungsgüte herbeigeführt werden.

Grundsätzlich möglich ist, dass im Rahmen der Erfindung die Steuerungen oder Regelungen ausschließlich die Be- und Entlüftung der beteiligten Luftfederbälge der Chassis-Luftfederungsanlage und der Kabinen-Luftfederungsanlage steuern oder regeln. In Weiterbildung der Erfindung ist das Steuergerät zusätzlich mit Steuerlogik ausgestattet, über welche mindestens ein Dämpfer des Chassis (oder der Kabine) gesteuert oder geregelt wird. Hierbei ist die Steuerung oder Regelung des mindestens einen Dämpfers des Chassis (und/oder der Kabine) mit den Steuerungen oder Regelungen der Chassis-Luftfederungsanlage und der Kabinen-Luftfederungsanlage koordiniert. Um lediglich ein (die Erfindung nicht beschränkendes) Beispiel zu nennen, kann für den Fall, dass die Steuerung oder Regelung der Chassis-Luftfederungsanlage und/oder der Kabinen-Luftfederungsanlage eine große Änderungsgeschwindigkeit eines Niveaus erfordert, gleichzeitig eine Dämpfung eines parallel zu dem jeweiligen Luftfederbalg wirkenden Dämpfers verringert werden, so dass die Be- oder Entlüftung des Luftfederbalges nicht gegen die Kraft eines Dämpfers erfolgen muss, womit die Schnelligkeit der Steuerung oder Regelung reduziert werden würde.

Möglich ist auch, dass das Steuergerät mit Steuerlogik ausgestattet ist, über welche eine Steuerung oder Regelung einer Abstützung eines in der Kabine angeordneten Sitzes erfolgt. Hierbei kann die Steuerung oder Regelung einer Feder, insbesondere eines Luftfederbalges, und/oder eines Dämpfers, mit welchem der Sitz gegenüber der Kabine abgestützt ist, hinsichtlich der Höhe des Sitzes, der Federsteifigkeit und/oder der Dämpfung erfolgen. In diesem Fall ist die Steuerung der Abstützung des Sitzes mit den Steuerungen oder Regelungen der Chassis-Luftfederungsanlage und der Kabinen-Luftfederungsanlage koordiniert. Auf diese Weise kann u. U. eine trotz der Steuerung oder Regelung der Chassis-Luftfederungsanlage und der Kabinen-Luftfederungsanlage verbleibende Schwingung der Kabine zumindest teilweise von dem Fahrer ferngehalten werden.

Die Steuerung oder Regelung der Chassis-Luftfederungsanlage und/oder Kabinen-Luftfederungsanlage erfolgt unter direkter Steuerung oder Regelung der Be- und Entlüftung oder unter Vorsteuerung von be- und entlüftenden Ventilen mittels von dem Steuergerät über elektrische Steuersignale angesteuerten Magnetventilen, welche an beliebiger Stelle in dem Nutzfahrzeug angeordnet sein können. Möglich ist, dass derartige Magnetventile in einer elektropneumatischen Kabinen-Steuereinheit oder einer elektropneumatischen Chassis-Steuereinheit zusammengefasst sein können. Hierbei können die genannten Steuereinheiten auch Module bilden, welche auch mit anderen Steuereinheiten zu einer Gesamteinheit zusammengefasst sein können. Für einen besonderen Vorschlag der Erfindung bildet das Steuergerät gemeinsam mit einer elektropneumatischen Kabinen-Steuereinheit und/oder einer elektropneumatischen Chassis-Steuereinheit eine Baueinheit, wobei auch möglich ist, dass in diese Baueinheit für die Steuerung oder Regelung verwendete Sensoren integriert sind, über welche beispielsweise ein gesteuerter oder geregelter Druck überwacht wird.

In weiterer Ausgestaltung der Erfindung besitzt das Steuergerät mindestens einen steuernden oder regelnden Ausgang für eine Kabinen-Luftfederungsanlage und/oder eine Chassis-Luftfederungsanlage.

Für eine Ausgestaltung des erfindungsgemäßen Steuergerätes besitzt dieses Steuerlogik zur Verarbeitung mindestens eines Eingangssignals.
- Das Eingangssignal kann ein Niveau des Chassis sein, beispielsweise das Niveau eines Luftfederbalges, einer Achse oder eines beliebigen Ortes des Nutzfahrzeuges. Auf Grundlage einer mittels der Steuerlogik erkannten Änderung des Niveaus kann dann eine Steuerung oder Regelung erfolgen. Das Entsprechende gilt für die Ausbildung des Eingangssignals als Niveauänderungsgeschwindigkeit.
- Möglich ist, dass die Steuerlogik ein Eingangssignal in Form eines Druckes oder eine Druckänderungsgeschwindigkeit eines Luftfederbalges der Chassis-Luftfederungsanlage verarbeitet. Beispielsweise kann eine Druckänderung auf eine veränderte Beladung und/oder eine dynamische Beanspruchung des Luftfederbalges hindeuten.
- Ebenfalls möglich ist, dass als Eingangssignal ein Betriebsparameter eines Dämpfers des Chassis, insbesondere ein Drosselquerschnitt, eine Ventilstellung des Dämpfers, eine Relativgeschwindigkeit des Dämpfers o. ä. verarbeitet wird.
- Entsprechend kann als Eingangssignal ein Niveau, eine Niveauänderungsgeschwindigkeit der Kabine, ein Druck, eine Druckänderungsgeschwindigkeit eines Luftfederbalges der Kabinen-Luftfederungsanlage und/oder ein Betriebsparameter eines Dämpfers der Kabine verwendet werden, welches dann durch die Steuerlogik des Steuergeräts ausgewertet wird.
- Durchaus möglich ist, dass zusätzlich die Auswertung eines Eingangssignals erfolgt, bei welchem es sich um das Signal eines anderen Steuergeräts handelt. Um lediglich ein Beispiel zu nennen, kann eine Verarbeitung eines Signals eines ABS- oder EBS-Steuergeräts erfolgen, so dass bereits vor oder mit Einleitung einer Bremsaktion geeignete Gegenmaßnahmen durch das Steuergerät für die Steuerung oder Regelung der Kabinen-Luftfederungsanlage und/oder der Chassis-Luftfederungsanlage getroffen werden können. Beispielsweise kann bei einer bevorstehenden Bremsbetätigung eine Erhöhung einer Dämpfung ausgesteuert werden und/oder einer durch die Bremsbetätigung vorhergesehenen Nickbewegung des Fahrzeugs wird vorgebeugt durch Belüftung von einer Vorderachse zugeordneten Luftfederbälgen.
- Möglich ist auch, dass dem Steuergerät ein Signal über ein Bussystem zugeführt wird.
- Des Weiteren kann dem Steuergerät als Eingangssignal ein Reifendruck zugeführt werden. Dieser Ausgestaltung liegt die Erkenntnis zugrunde, dass sich das dynamische Verhalten des Schwingungssystems je nach Reifendruck, also elastischer Abstützung des Rades auf der Fahrbahn, verändert. Durch Verarbeitung des Reifendruckes kann somit letztendlich die Steuerungs- oder Regelungsgüte erhöht werden.
- Ebenfalls möglich ist, dass als Eingangssignal von dem Steuergerät eine Bremskraft oder ein Bremssignal verarbeitet wird, um bereits rechtzeitig Kenntnisse über die Gefahr der Entstehung einer Nickbewegung mit der Bremsbetätigung informiert zu werden und rechtzeitig geeignete Gegenmaßnahmen aussteuern oder ausregeln zu können.
- Ebenfalls möglich ist, dass als Eingangssignal ein Signal eines Navigationssystems oder eines Ortserkennungssystems (GPS) verwendet wird. Beispielsweise kann mit dem Erkennen durch das Navigationssystem, dass eine Annäherung an das Ziel erfolgt, ein Veränderung eines Niveau des Chassis, der Kabine und/oder des Fahrersitzes herbeigeführt werden, welche ein Aussteigen des Fahrers aus der Kabine vereinfacht. Ebenfalls möglich ist, dass für den Fall, dass mittels des Ortserkennungssystems oder Navigationssystems erkannt wird, dass eine Annäherung an eine Rampe erfolgt, wo aller Voraussicht nach ein Be- oder Entladen des Nutzfahrzeugs erfolgt, eine automatische Niveauänderung herbeigeführt wird zwecks Anpassung an die Rampenhöhe. Hinsichtlich weiterer Details zu dieser Ausgestaltung wird auf die Druckschrift DE 10 2011 000 668 B4 verwiesen, deren Einrichtungen und Verfahren zur automatisierten Abbremsung mit rückwärtiger Annäherung an die Rampe einerseits und die automatische Anpassung des Niveaus an die Rampenhöhe zum Gegenstand der vorliegenden Anmeldung gemacht wird.
- Ebenfalls möglich ist, dass als Eingangssignal von der Steuerlogik des Steuergeräts eine Geschwindigkeit des Nutzfahrzeugs verarbeitet wird.
- Wird als Eingangssignal ein Lenkwinkel des Nutzfahrzeugs berücksichtigt, kann eine geeignete Maßnahme ergriffen werden, um rechtzeitig einer Rollbewegung des Nutzfahrzeugs infolge einer Kurvenfahrt entgegenzuwirken.
- Ebenfalls möglich ist, dass als Eingangssignal von der Steuerlogik des Steuergeräts eine aktuelle oder zukünftige Fahrbahnneigung berücksichtigt wird, so dass rechtzeitig geeignete Gegenmaßnahmen ergriffen werden können, um einer Roll- oder Nickbewegung des Fahrzeugs infolge der aktuellen oder zukünftigen Fahrbahnneigung rechtzeitig entgegenwirken zu können.
- Eine weitere mögliche Eingangsgröße stellt die Beladung des Nutzfahrzeugs dar, welche signifikant die Systemgrößen des Schwingungssystems, nämlich die Masse, verändern kann, womit auch eine veränderte Steuerung oder Regelung durch das Steuergerät erfolgen muss.
- Ebenfalls möglich ist, dass als Eingangssignal von dem Steuergerät ein Betriebssignal eines Anhängers oder Aufliegers verarbeitet wird. Im einfachsten Fall handelt es sich bei dem Betriebssignal um ein Signal dahingehend, ob überhaupt ein Anhänger oder Auflieger mit einem Zugfahrzeug gekoppelt ist. Somit kann durch die Steuerung oder Regelung berücksichtigt werden, ob die Dynamik des Schwingungssystems von dem Anhänger oder Auflieger beeinflusst wird oder nicht. Des Weiteren kann das Betriebssignal des Anhängers oder Aufliegers bspw. in einer Kopplungskraft, einer ermittelten Masse des Anhängers oder Aufliegers, einem Beladungszustand des Anhängers oder Aufliegers, einer Kenngröße für die Fahrstabilität des Anhängers oder Aufliegers, ein Winkel zwischen den Längsachse des Anhängers und des Aufliegers u. ä. bestehen.
- Möglich ist auch, dass als Eingangssignal von dem Steuergerät ein Signal eines Beschleunigungssensors, eines Gierratensensors, eines Rollsensors und/oder eines Nicksensors verwendet wird.
- Insbesondere für den Fall, dass über das Steuergerät auch eine Steuerung oder Regelung der Abstützung eines in der Kabine angeordneten Sitzes erfolgt, kann es von Vorteil sein, wenn als Eingangsgröße von dem Steuergerät ein automatisch ermitteltes Gewicht des Fahrers auf dem Sitz oder ein manuell vorgegebenes Gewicht berücksichtigt wird.
- Möglich ist, dass Auswirkungen eines Schaltvorgangs auf die Chassis-Luftfederungsanlage und/oder die Kabinen-Luftfederungsanlage und ggf. eine Abstützung eines in der Kabine angeordneten Sitzes vermieden werden sollen, insbesondere ein Nicken infolge einer Längsverzögerung während des Schaltvorgangs. Hierzu kann es vorteilhaft sein, wenn als Eingangsgröße von dem Steuergerät ein Signal hinsichtlich eines Schaltvorgangs verarbeitet wird.
- Möglich ist auch, dass als Eingangsgröße eine Bremspedalstellung, eine Gaspedalstellung und/oder eine Bremspedalstellungsänderungsgeschwindigkeit oder eine Gaspedalstellungsänderungsgeschwindigkeit verarbeitet wird.
- Gemäß einem weiteren Vorschlag kann das Signal eines Retarders verarbeitet werden.

Mit der Steuerlogik des Steuergeräts kann dann durch die Verarbeitung zumindest eines dieser Eingangssignale die Steuerung oder Regelung oder Chassis-Luftfederungsanlage, der Kabinen-Luftfederungsanlage, eines Luftfederbalges für den Sitz und/oder eines Dämpfers des Chassis, der Kabine und/oder des Sitzes erfolgen.

In weiterer Ausgestaltung der Erfindung ist das Steuergerät mit Steuerlogik ausgestattet, mittels welcher eine automatische Veränderung einer statischen oder mittleren Niveauhöhe des Chassis erfolgt. Beispielsweise kann über das Steuergerät je nach Geschwindigkeit die (mittlere) Niveauhöhe des Chassis angepasst werden. Auch möglich ist, dass die automatische Veränderung in einer Veränderung der Niveauhöhe im Bereich einer Rampe besteht. Um lediglich ein weiteres (nicht beschränkendes) Beispiel zu nennen, kann die automatische Veränderung der Niveauhöhe des Chassis auch erfolgen zwecks Vorbereitung der Kupplung mit einem Anhänger über eine Sattelkupplung oder zwecks Vorbereitung der Aufnahme eines Containers.

Ein weiterer Aspekt der Erfindung widmet sich einer Parksituation. Diese kann beispielsweise automatisch erkannt werden mit dem Erreichen eines vorbestimmten Ortes, welcher beispielsweise in einem Navigationssystem abgelegt ist, insbesondere ein Rast- und Parkplatz oder ein Betriebshof. Ebenfalls möglich ist, dass eine Parksituation erkannt wird mit dauerhafter Geschwindigkeit von Null, Betätigung der Feststellbremse, Deaktivierung der Brennkraftmaschine o. ä. Alternativ oder kumulativ möglich ist, dass der Fahrer über einen Schalter dem Steuergerät mitteilt, dass eine Parksituation vorliegt. In einer derartigen Parksituation ist eine horizontale Ausrichtung der Kabine wünschenswert. Dies erfolgt erfindungsgemäß durch koordinierten Betrieb der Steuerungen oder Regelungen der Chassis-Luftfederungsanlage einerseits und der Kabinen-Luftfederungsanlage andererseits. Möglich ist durchaus, dass hier beispielsweise die Steuerung oder Regelung für eine Raumrichtung durch die Chassis-Luftfederungsanlage und für eine andere Raumrichtung durch die Kabinen-Luftfederungsanlage erfolgt. Vorzugsweise erfolgt aber sogar für eine Raumrichtung die Herbeiführung der horizontalen Ausrichtung der Kabine durch die koordinierte Steuerung oder Regelung sowohl der Chassis-Luftfederungsanlage als auch der Kabinen-Luftfederungsanlage, so dass sich eine gewünschte Anhebung oder Absenkung der Kabine aus der Summe der Anhebung oder Absenkung des Chassis und der Anhebung oder Absenkung der Kabine relativ zu dem Chassis ergibt, wodurch u. U. auch der Ausgleich größerer Neigungswinkel der Fahrbahn, auf welcher das Fahrzeug geparkt wird, möglich ist.

Wie zuvor erläutert, bildet das Nutzfahrzeug mit dem Chassis und der Kabine eine komplexes Schwingungssystem, bei welchem es sich bei sehr grober Vereinfachung wie zuvor erläutert zumindest um eine Schwingungssystem mit zwei Freiheitsgraden handelt. Tatsächlich verfügen aber die einzelnen federnd gegeneinander abgestützten Bauelemente des Nutzfahrzeugs über vielfältige Freiheitsgrade in sämtlichen Raumrichtungen. Um für die Steuerung oder Regelung in dem Steuergerät die wechselseitigen Einflüsse berücksichtigen zu können und u. U. ein zukünftiges Verhalten des Schwingungssystems vorhersagen zu können, ist es von Vorteil, wenn von der Steuerlogik des Steuergeräts ein mechanisches Ersatzmodell der Massen, Federn und Dämpfern zur Berücksichtigung der mechanischen Kenngrößen, insbesondere der Reifen, der Reifenabstützung am Chassis und/oder der Abstützung einer Achse am Chassis, der Abstützung der Fahrerkabine gegenüber dem Chassis und/oder der Abstützung des Sitzes gegenüber der Fahrerkabine berücksichtigt ist. Hierbei sollte das mechanische Ersatzmodell so einfach wie möglich, aber so komplex wie erforderlich, um die gewünschten Effekte abbilden zu können, gewählt sein. Alternativ oder kumulativ kann in der Steuerlogik des Steuergeräts ein sich aus einem derartigen mechanischen Ersatzmodell ergebendes Übertragungsverhalten berücksichtigt sein.

Für eine weitere Lösung der der Erfindung zugrundeliegenden Aufgabe besitzt eine Druckluftanlage neben der Chassis-Luftfederungsanlage und der Kabinen-Luftfederungsanlage ein Steuergerät der zuvor erläuterten Art. Hierbei ist das Steuergerät sowohl für die Steuerung und/oder Regelung einer elektropneumatischen Chassis-Steuereinheit als auch einer elektropneumatischen Kabinen-Steuereinheit verantwortlich.

Eine weitere Lösung der der Erfindung zugrundeliegenden Aufgabe betrifft ein Verfahren zum Betrieb einer Druckluftanlage eines Nutzfahrzeugs. Bei diesem Verfahren steuert oder regelt ein einziges Steuergerät sowohl die Chassis-Luftfederungsanlage als auch die Kabinen-Luftfederungsanlage, wobei durch Steuerlogik des Steuergeräts die Steuerungen oder Regelungen der Chassis-Luftfederungsanlage und der Kabinen-Luftfederungsanlage derart miteinander koordiniert werden, dass die Steuerungs- oder Regelungsmaßnahmen der Chassis-Luftfederungsanlage einerseits und der Kabinen-Luftfederungsanlage andererseits nicht unabhängig voneinander bestimmt werden, sondern diese vielmehr gegenseitig voneinander abhängig sind oder sich gegenseitig beeinflussen.

In besonderer Ausgestaltung dieses Verfahrens sind die Steuerungen oder Regelungen der Chassis-Luftfederungsanlage und der Kabinen-Luftfederungsanlage miteinander koordiniert, indem mit der Steuerlogik eine Auswirkung der Steuerung oder Regelung der Chassis-Luftfederungsanlage auf das zukünftige Bewegungsverhalten der Kabine ohne Steuerung oder Regelung der Kabinen-Luftfederungsanlage prognostiziert wird. Beispielsweise kann sich bei dem Überfahren einer Unebenheit der Fahrbahn eine transiente Schwingung der Kabine als prognostiziertes zukünftiges Bewegungsverhalten ergeben. Erfindungsgemäß erfolgt dann die Steuerung oder Regelung der Kabinen-Luftfederungsanlage derart, dass anstelle des prognostizierten Bewegungsverhaltens der Kabine ein Soll-Bewegungsverhalten herbeigeführt wird (oder diese zumindest approximiert wird). Für das genannte Beispiel einer sich ergebenden transienten Schwingung der Kabine kann die Steuerung oder Regelung der Kabinen-Luftfederungsanlage gerade derart erfolgen, dass durch Be- und Entlüftung der Luftfederbälge der Kabinen-Luftfederungsanlage gerade der Ausbildung der genannten transienten Schwingung entgegengewirkt wird.

Für einen weiteren erfindungsgemäßen Vorschlag wird bei dem Verfahren durch die Steuerlogik die Chassis-Luftfederungsanlage gegenläufig zu der Kabinen-Luftfederungsanlage angesteuert oder geregelt. Wird somit beispielsweise bei der Chassis-Luftfederungsanlage eine Belüftung durchgeführt, erfolgt eine Entlüftung der Luftfederbälge der Kabinen-Luftfederungsanlage in gleichem oder einem über eine Kennlinie vorgegebenen Umfang (und umgekehrt).

In weiterer Ausgestaltung der Erfindung sind die Steuerungen oder Regelungen der Chassis-Luftfederungsanlage und der Kabinen-Luftfederungsanlage miteinander koordiniert, indem mit der Steuerlogik in einer automatisch erkannten Parksituation oder manuell vom Fahrer indizierten Parksituation eine horizontale Ausrichtung der Kabine sowohl durch Veränderung der Beaufschlagung der Chassis-Luftfederungsanlage als auch der Kabinen-Luftfederungsanlage herbeigeführt wird.

In weiterer Ausgestaltung des erfindungsgemäßen Verfahrens kann über die Steuerlogik in einer Parksituation auch eine Schwingung der Kabine, insbesondere bei Bewegungen des Fahrers in der Kabine, Wind oder Fahrtwind eines vorbeifahrenden Fahrzeugs, zumindest verringert werden durch Erhöhung oder Maximierung einer Dämpfung eines Dämpfers der Chassis-Luftfederungsanlage und/oder der Kabinen-Luftfederungsanlage.

In weiterer Ausgestaltung des erfindungsgemäßen Verfahrens berücksichtigen die Steuerungen oder Regelungen der Chassis-Luftfederungsanlage und der Kabinen-Luftfederungsanlage einen Druck in einem Behälter, über welchen die Chassis-Luftfederungsanlage und/oder die Kabinen-Luftfederungsanlage mit Druckluft versorgt werden. Dieser Ausgestaltung liegt die Erkenntnis zugrunde, dass sich eine Änderungsgeschwindigkeit der Druckbeaufschlagung der Chassis-Luftfederungsanlage und/oder der Kabinen-Luftfederungsanlage bei einer Veränderung des Drucks in einem Behälter verändert - für einen großen Druck in dem Behälter ergibt sich eine große Änderungsgeschwindigkeit, während diese mit einer Verringerung des Druckes sinkt. Diese Einflussgröße kann durch die erfindungsgemäße Ausgestaltung berücksichtigt werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis 3**: zeigen unterschiedliche Ausgestaltungen einer Druckluftanlage mit einer Chassis-Luftfederungsanlage und einer Kabinen-Luftfederungsanlage.
- **Fig. 4**: zeigt die Änderung eines Niveaus einer Kabine, welches sich durch koordinierte Steuerung der Änderung des Niveaus der Chassis-Luftfederungsanlage und der Kabinen-Luftfederungsanlage ergibt.

### FIGURENBESCHREIBUNG

In den Figuren sind elektrische Signalleitungen gestrichelt, Module oder Baueinheiten stichpunktiert und pneumatische Leitungen mit durchgezogenen Linien dargestellt.

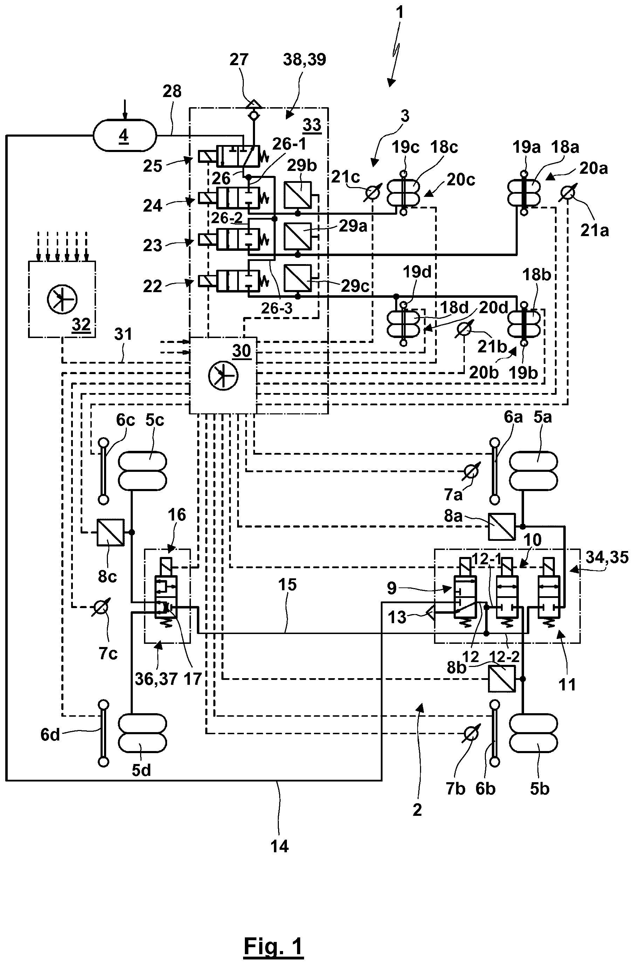

**Fig. 1** zeigt schematisch eine Druckluftanlage 1 eines Nutzfahrzeugs, welche eine Chassis-Luftfederungsanlage 2 sowie eine Kabinen-Luftfederungsanlage 3 besitzt. Für das dargestellte Ausführungsbeispiel sind die Chassis-Luftfederungsanlage 2 und die Kabinen-Luftfederungsanlage pneumatisch miteinander gekoppelt, indem diese aus derselben Druckmittelquelle, hier demselben Behälter 4, mit Druckluft versorgt werden.

In der Chassis-Luftfederungsanlage 2 sind Luftfederbälge 5a, 5b zwischen einer Vorderachse oder der Vorderachse zugeordneten Rädern und dem Chassis angeordnet, während Luftfederbälge 5c, 5d der Hinterachse oder Rädern der Hinterachse zugeordnet sind. Abweichend zu dem dargestellten Ausführungsbeispiel können weitere Räder und/oder Achsen mit zugeordneten Luftfederbälgen, eine Liftachse mit zugeordneten Luftfederbälgen u. ä. Bestandteil der Chassis-Luftfederungsanlage 2 sein. Im Bereich der Räder bzw. Achsen sind Dämpfer 6a, 6b, 6c, 6d zwischen Chassis und Achse bzw. Rad angeordnet. Über Sensoren 7a, 7b kann ein Niveau der Luftfederbälge 5a, 5b und/oder eine Niveauänderungsgeschwindigkeit im Bereich der Luftfederbälge 5a, 5b oder der Dämpfer 6a, 6b erfasst werden. Ein Sensor 7c erfasst gemeinsam für die Luftfederbälge 5c, 5d und die Dämpfer 6c, 6d ein Niveau im Bereich der Hinterachse. Entsprechend kann über einen Drucksensor 8a, 8b der Druck in einem Luftfederbalg 5a, 5b erfasst werden, während über einen Drucksensor 8c der Druck in dem Luftfederbalg 5c der Hinterachse erfasst werden kann.

Eine Druckbeaufschlagung der Luftfederbälge 5a, 5b erfolgt über Magnetventile 9, 10, 11. Das Magnetventil 9 ist hier als 3/2-Wegeventil ausgebildet, welches in nicht elektrisch betätigter Stellung eine Zentralleitung 12 mit einer Entlüftung 13 verbindet, während mit elektrischer Beaufschlagung des Magnetventils 9 in der anderen Schaltstellung die Zentralleitung 12 über eine Versorgungsleitung 14 mit dem Behälter 4 verbindbar ist. Somit kann je nach Schaltstellung des Magnetventils 9 die Zentralleitung 12 be- und entlüftet werden. Die Zentralleitung 12 verzweigt über eine Verzweigung zu einem Zentralleitungsteil 12-1 sowie einem Zentralleitungsteil 12-2. Der Zentralleitungsteil 12-1 ist über das Magnetventil 10 mit dem Luftfederbalg 5b verbunden, während der Zentralleitungsteil 12-2 über das Magnetventil 11 mit dem Luftfederbalg 5a verbunden ist. Die Magnetventile 10, 11 sind jeweils als 2/2-Wegeventile ausgebildet. In der in Fig. 1 wirksamen, federbeaufschlagten Schaltstellung ohne elektrische Ansteuerung der Magnetventile 10, 11 sperren diese die zugeordneten Luftfederbälge 5a, 5b ab. Wird hingegen ein Magnetventil 10, 11 durch elektrische Ansteuerung in die Durchlassstellung umgeschaltet, kann der zugeordnete Luftfederbalg 5a, 5b je nach Schaltstellung des Magnetventils 9 be- oder entlüftet werden. Sollen beide Luftfederbälge 5a, 5b gemeinsam be- oder entlüftet werden, können die beiden Magnetventile 9, 10 gleichzeitig in ihre Durchlassstellung überführt werden. Soll hingegen ein Luftfederbalg 5a entlüftet werden, während der andere Luftfederbalg 5b belüftet werden soll, wird zunächst das Magnetventil 11 in seine Durchlassstellung überführt, das Magnetventil 10 in seine Sperrstellung überführt und dann das Magnetventil 9 in die Belüftungsstellung überführt, womit der Luftfederbalg 5a belüftet wird. Währenddessen bleibt das Magnetventil 10 in seiner Sperrstellung. Mit Beendigung der Belüftung wird das Magnetventil 11 in seine Sperrstellung überführt mit anschließender Überführung des Magnetventils 10 in die Durchlassstellung. Nun kann das Magnetventil 9 in die Entlüftungsstellung überführt werden, womit der Luftfederbalg 5b entlüftet wird.

Von dem Zentralleitungsteil 12-2 zweigt eine Hinterachsleitung 15 ab. Diese ist verbunden mit einem Eingang eines Magnetventils 16, welches hier als 3/2-Wegeventil ausgebildet ist. Die beiden Ausgänge des Magnetventils 16 sind jeweils mit einem Luftfederbalg 5c, 5d verbunden. Das Magnetventil 16 sperrt in der in Fig. 1 wirksamen Schaltstellung ohne elektrische Ansteuerung den Eingang gegenüber den Ausgängen ab, so dass keine Verbindung der Hinterachsleitung 15 mit den Luftfederbälgen 5c, 5d besteht. Stattdessen sind in dieser Schaltstellung über das Magnetventil 16 die beiden Luftfederbälge 5c, 5d über eine in das Magnetventil 16 integrierte Drossel 17 miteinander pneumatisch gekoppelt. In der anderen, durch elektrische Ansteuerung des Magnetventils 16 herbeiführbaren Schaltstellung verbindet das Magnetventil 16 den Eingang mit den beiden Ausgängen, so dass die Hinterachsleitung 15 mit den Luftfederbälgen 5c, 5d verbunden ist. In dieser Schaltstellung des Magnetventils 16 kann je nach Schaltstellung des Magnetventils 9 eine Be- und Entlüftung der Luftfederbälge 5c, 5d erfolgen. Ist zumindest eines der Magnetventile 10, 11 geöffnet, kann dies gemeinsam mit zumindest einem der Luftfederbälge 5a, 5b erfolgen, während hingegen bei Überführung der Magnetventile 10, 11 in die Sperrstellung die alleinige Be- oder Entlüftung der Luftfederbälge 5c, 5d erfolgen kann.

In der Kabinen-Luftfederungsanlage 3 ist die Kabine über Luftfederbälge 18a, 18b, 18c, 18d und Dämpfer 19a, 19b, 19c, 19d gegenüber dem Chassis abgestützt. Für das dargestellte Ausführungsbeispiel sind die Dämpfer 19 unter Bildung eines Luftfeder-Dämpfer-Moduls 20 in die Luftfederbälge 18 integriert. Die Luftfederbälge 18b, 18d sind unmittelbar pneumatisch miteinander verbunden, so dass diese über im Wesentlichen gleiche Drücke verfügen. Den Luftfederbälgen 18a, 18c sind jeweils Sensoren 21a, 21c zugeordnet, mittels welchen ein relatives Niveau der Kabine gegenüber dem Chassis oder eine Niveauänderungsgeschwindigkeit erfasst werden kann. Hingegen erfolgt für die Luftfederbälge 18b, 18d eine gemeinsame Erfassung eines (gemittelten) relativen Niveaus oder einer Niveauänderungsgeschwindigkeit über einen Sensor 21b.

Die Steuerung oder Regelung der Beaufschlagung der Luftfederbälge 18a bis 18d erfolgt über Magnetventile 22, 23, 24, 25. Hierbei ist das Magnetventil 25 als 3/2-Wegeventil ausgebildet. Das Magnetventil 25 verbindet in der in Fig. 1 wirksamen Schaltstellung ohne elektrische Beaufschlagung eine Zentralleitung 26 mit einer Entlüftung 27, während das Magnetventil 25, in der anderen, durch elektrische Ansteuerung herbeiführbaren Schaltstellung die Zentralleitung 26 über eine Versorgungsleitung 28 mit dem Behälter 4 verbindet. Die Zentralleitung 26 verzweigt in Zentralleitungsteile 26-1, 26-2 und 26-3, welche jeweils mit einem Magnetventil 22, 23, 24 verbunden sind. In der in Fig. 1 wirksamen federbeaufschlagten Schaltstellung ohne elektrische Ansteuerung sperrt das Magnetventil 24 den Luftfederbalg 18c gegenüber dem Zentralleitungsteil 26-1 ab, während durch elektrische Ansteuerung in der anderen Schaltstellung das Magnetventil 24 den Zentralleitungsteil 26-1 mit dem Luftfederbalg 18c verbindet, so dass je nach Schaltstellung des Magnetventils 25 der Luftfederbalg 18c be- oder entlüftet werden kann. Entsprechend sperrt das Magnetventil 23 den Zentralleitungsteil 26-2 in der in Fig. 1 wirksamen federbeaufschlagten und nicht elektrisch angesteuerten Schaltstellung gegenüber dem Luftfederbalg 18a ab, während in der anderen, elektrisch angesteuerten Schaltstellung das Magnetventil 23 den Zentralleitungsteil 26-2 mit dem Luftfederbalg 18a verbindet, so dass je nach Schaltstellung des Magnetventils 25 der Luftfederbalg 18a be- oder entlüftet werden kann. Schließlich sperrt das Magnetventil 22 in der in Fig. 1 wirksamen Schaltstellung infolge der Federbeaufschlagung ohne elektrische Ansteuerung den Zentralleitungsteil 26-3 gegenüber den Luftfederbälgen 18b, 18d ab, während in der anderen, durch elektrische Beaufschlagung herbeiführbaren Schaltstellung das Magnetventil 22 den Zentralleitungsteil 26-3 mit den Luftfederbälgen 18b, 18d verbindet, so dass je nach Schaltstellung des Magnetventils 25 die Luftfederbälge 18b, 18d gemeinsam be- oder entlüftet werden können. Eine Erfassung des Drucks in den Luftfederbälgen 18a, 18b, 18c, 18d erfolgt über Drucksensoren 29a, 29b, 29c, welche jeweils einen Druck in einer Leitung zwischen dem Magnetventil 22, 23, 24 und dem zugeordneten Luftfederbalg 18a, 18c, 18b und 18d erfassen.

In der Druckluftanlage 1 erfolgt die Steuerung oder Regelung sowohl der Chassis-Luftfederungsanlage 2 als auch der Kabinen-Luftfederungsanlage 3 durch ein einziges, zentrales Steuergerät 30. Dem Steuergerät 30 werden hierzu Messsignale, insbesondere Messsignale der Sensoren 21 und der Drucksensoren 29 der Kabinen-Luftfederungsanlage 3 sowie der Sensoren 7 sowie Drucksensoren 8 der Chassis-Luftfederungsanlage 2, zugeführt, auf deren Grundlage eine Steuerung oder Regelung erfolgen kann. Über von dem Steuergerät 30 erzeugte Steuersignale (worunter auch Regelsignale verstanden werden) erfolgt die Steuerung oder Regelung der Magnetventile 9, 10, 11 sowie 16 der Chassis-Luftfederungsanlage 2 sowie der Magnetventile 22, 23, 24, 25 der Kabinen-Luftfederungsanlage 3. Möglich ist, dass das Steuergerät 30, beispielsweise über ein Bussystem 31, mit einem anderen Steuergerät 32, beispielsweise einem ABS- oder EBS-Steuergerät, vernetzt ist und in Signalaustausch steht.

Für das dargestellte Ausführungsbeispiel sind funktional einander zugeordnete Magnetventile zu elektropneumatischen Steuereinheiten zusammengefasst: Die Magnetventile 22, 23, 24, 25 sind, hier gemeinsam mit den Drucksensoren 29a, 29b, 29c, zu einer Kabinen-Steuereinheit 33 zusammengefasst. Die Magnetventile 9, 10, 11 sind zu einer Chassis-Steuereinheit 34, hier einer Vorderachs-Steuereinheit 35, zusammengefasst. Das Magnetventil 16 ist Bestandteil einer weiteren Chassis-Steuereinheit 36, welche hier eine Hinterachs-Steuereinheit 37 ist.

Für das Ausführungsbeispiel gemäß Fig. 1 bilden die Kabinen-Steuereinheit 33 und das Steuergerät 30 eine Baueinheit 38, womit ein Steuergerät 39 gebildet ist, welches auch elektropneumatische Funktionen übernehmen kann.

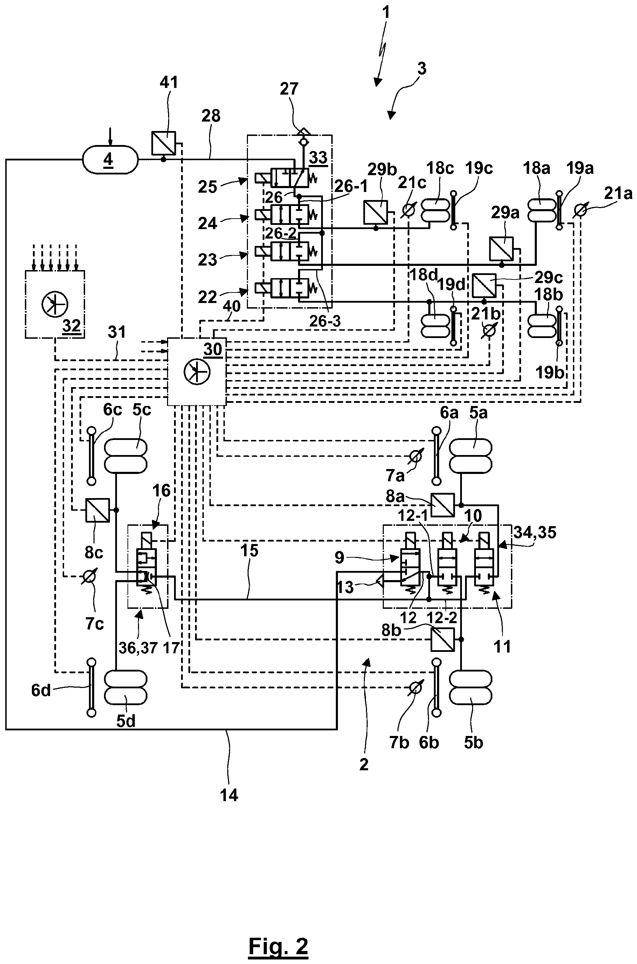

Für das in **Fig. 2** dargestellte Ausführungsbeispiel sind das Steuergerät 30 und die Kabinen-Steuereinheit 33 nicht zu einer Baueinheit 38 zusammengefasst, sondern separat voneinander ausgebildet, so dass die Ansteuerung der Kabinen-Steuereinheit 33 durch das Steuergerät 30 über eine Steuerleitung 40 erfolgt. Des Weiteren ist gemäß Fig. 2 abweichend zu Fig. 1 keine Integration der Drucksensoren 29 in die Kabinen-Steuereinheit 33 erfolgt - vielmehr sind diese außerhalb der Kabinen-Steuereinheit 33, beispielsweise unmittelbar benachbart den Luftfederbälgen 18, angeordnet. Gemäß Fig. 2 findet ein weiterer Drucksensor 41 Einsatz, dessen Drucksignal dem Steuergerät 30 zugeführt wird. Über den Drucksensor 41 wird der Druck in dem Behälter 4, hier der Druck in der Versorgungsleitung 28, erfasst. Unter Berücksichtigung des Drucksignals des Drucksensors 41 kann in dem Steuergerät 30 ermittelt werden, welche Änderungsgeschwindigkeit sich bei einer Belüftung eines Luftfederbalges 18, 5 ergibt bei Überführung der zugeordneten Magnetventile in die Belüftungsstellung. Schließlich sind gemäß Fig. 2 die Luftfederbälge 18 und Dämpfer 19 nicht zu Luftfeder-Dämpfer-Modulen 20 zusammengefasst, sondern separat voneinander ausgebildet.

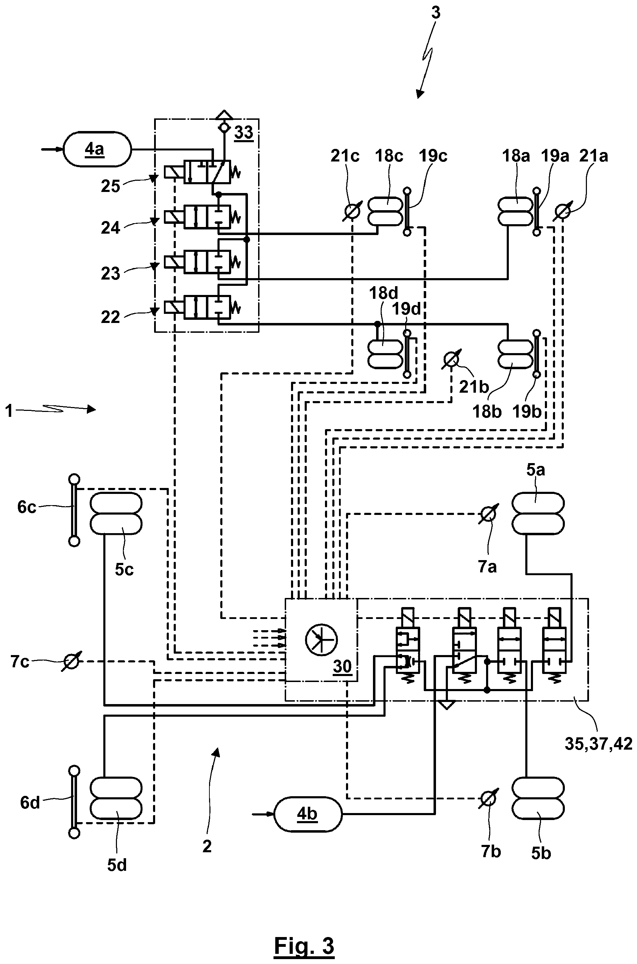

**Fig. 3** zeigt eine Druckluftanlage 1, bei welcher die Chassis-Luftfederungsanlage 2 und die Kabinen-Luftfederungsanlage 3 pneumatisch voneinander entkoppelt sind, indem diese über zwei separate Behälter 4a, 4b mit Druckluft versorgt werden. Durchaus möglich ist allerdings, dass die beiden Behälter 4a, 4b in in Fig. 3 nicht dargestellter Weise gemeinsam, insbesondere durch eine Druckluftaufbereitungseinrichtung mit einem Mehrkreisschutzventil für die Druckluftversorgung mehrerer Verbraucherkreise, mit Druckluft versorgt werden. Hier ist die Kabinen-Luftfederungsanlage 3 grundsätzlich entsprechend der Kabinen-Luftfederungsanlage 3 gemäß Fig. 2 ausgebildet, wobei hier allerdings die Drucksensoren 29 entfallen sind.

In der Chassis-Luftfederungsanlage 2 sind die Vorderachs-Steuereinheit 35 und die Hinterachs-Steuereinheit 37 bei gleichen enthaltenen pneumatischen Bauelementen sowie Leitungsverbindungen zu einer Chassis-Steuereinheit 42 zusammengefasst, in welche in diesem Fall auch das Steuergerät 30 integriert ist. Auch hier sind die Drucksensoren 8 entfallen. Des Weiteren sind den Luftfederbälgen 5a, 5b der Vorderachse keine Dämpfer 6a, 6b zugeordnet.

Sofern in den Figuren Baueinheiten gebildet sind, können diese mit einem ein- oder mehrteiligen Gehäuse gebildet sein. Durchaus möglich ist aber auch, dass diese Baueinheiten modular ausgebildet sind. So kann beispielsweise gemäß Fig. 3 das Steuergerät 30 ein Modul bilden, während die Chassis-Steuereinheit 42 ein weiteres Modul bildet, u. U. mit Teilmodulen, die von der Vorderachs-Steuereinheit 35 und der Hinterachs-Steuereinheit 37 gebildet sind. Die Module werden dann miteinander gekoppelt, aneinander angeflanscht o. ä.

Eine Kabinen-Steuereinheit 33, ggf. gemäß Fig. 1 gemeinsam mit dem Steuergerät 30, kann im Bereich der Kabine oder unterhalb derselben angeordnet sein, so dass nicht erforderlich ist, dass Leitungen in die Kabine geführt werden müssen.

Die erfindungsgemäße Druckluftanlage kann Einsatz finden und geeignet weitergebildet sein für ein Fahrzeug beliebigen Typs und beliebiger Achsgestaltung. Beispielsweise findet die Druckluftanlage wie dargestellt Einsatz für ein zweiachsiges Fahrzeug, wobei durchaus auch eine Liftachse, eine Vorlaufachse, eine Nachlaufachse o. ä. vorhanden sein kann.

Für die Herbeiführung geeigneter Steuerungs- oder Regelungsmaßnahmen durch das Steuergerät 30 kann u. U. eine bevorzugte Veränderung der Beaufschlagung der Luftfederbälge erfolgen, wenn langfristig eine Änderung herbeigeführt werden soll. U. U. kann hingegen eine schnelle Niveauänderung unterbunden werden über eine Verstellung der Dämpfung eines hydraulischen Dämpfers.

Für die dargestellten Ausführungsbeispiele bilden die Steuereinheiten 33, 34, 35, 36, 37, 42 reine elektropneumatische Baueinheiten, wobei hier die Sensoren integriert ein können oder extern angeordnet sein können.

Für die in Fig. 3 dargestellte Versorgung der Chassis-Luftfederungsanlage 2 einerseits und der Kabinen-Luftfederungsanlage 3 andererseits über separate Behälter 4a, 4b kann ein unterschiedliches Druckniveau für die Luftfederungsanlagen 2, 3 Einsatz finden. Beispielsweise kann die Kabinen-Luftfederungsanlage 3 mit dem zugeordneten Behälter 4a als Nebenverbraucherkreis oder Kreis mit einem verringerten Druck, beispielsweise 8-10 bar, ausgebildet sein, während die Kabinen-Luftfederungsanlage 3 mit dem zugeordneten Behälter 4b als Hochdruckkreis, beispielsweise mit einem Betriebsdruck von 12,5 bar, ausgebildet sein kann.

Das Steuergerät 30 ist mit Steuerlogik ausgestattet, welche eine Steuerung oder Regelung sowohl der Chassis-Luftfederungsanlage 2 (mit der Steuerung oder Regelung der Druckbeaufschlagung der Luftfederbälge 5 und/oder der Dämpfer 6) sowie eine Steuerung der Kabinen-Luftfederungsanlage 3 (mit einer Steuerung der Druckbeaufschlagung der Luftfederbälge 18 und der Dämpfer 19) in koordinierte Weise ermöglicht.

Möglich ist, dass automatisch durch die Steuerlogik oder infolge manueller Anforderung durch den Fahrer eine Anpassung des Niveaus des Chassis erfolgt. Beispielsweise kann ein Standardniveau während des Parkens und ein u. U. abweichendes Standardniveau während des Fahrens, in einigen Fällen sogar abhängig von der Geschwindigkeit, automatisch oder infolge manueller Anforderung herbeigeführt werden. Des Weiteren erfolgt eine horizontale Ausrichtung der Kabine während einer Parksituation. Möglich ist die Anpassung der Höhe des Chassis an eine Rampe mit rückwärtiger Annäherung, vgl. DE 10 2011 000 668 B4. Schließlich kann eine Anpassung des Niveaus erfolgen zur Herbeiführung einer Kuppelhöhe für eine Sattelkupplung oder für die Aufnahme oder das Absetzen eines Containers.

Darüber hinaus kann eine dynamische Regelung der Federung und Dämpfung erfolgen. Hierbei kann die Anpassung einer dynamischen Fahrhöhe während der Fahrt erfolgen. Ebenfalls möglich ist, dass während der Fahrt, u. U. ebenfalls geschwindigkeitsabhängig, gezielt eine Neigung der Fahrerkabine verändert wird, was beispielsweise zur Beeinflussung des CW-Wertes erfolgen kann, indem bspw. die Fahrerkabine mit Aufnahme des Fahrbetriebs oder mit Überschreiten einer Schwellgeschwindigkeit schräggestellt wird.

Beeinflusst werden kann die Dämpfung aufgrund mindestens eines Sensors, bei welchem es sich um einen Wegsensor für das Chassis, einen Wegsensor für die Kabine, einen Drucksensor für die Luftfederbälge, einen Beschleunigungssensor oder einen Lenkwinkelsensor handeln kann. Möglich ist auch eine dynamische schnelle Regelung während der Fahrt, um Oszillationen von Chassis und/oder Kabine bei Beschleunigungen, Schaltvorgängen, Bremsvorgängen oder Lenkvorgängen zu vermeiden. Automatisch kann eine Regelung in eine Niveauhöhe für einen Fahrbetrieb erfolgen, wenn erkannt wird, dass ein Gang eingelegt wird, eine Mindestgeschwindigkeit überschritten wird, eine Brennkraftmaschine gestartet wird und/oder ein Lösen einer Feststellbremse erfolgt. Durchaus möglich ist, dass durch das Steuergerät 30 Signale von einem EBS-Steuergerät, einem ASR-Steuergerät, einem ESP-Steuergerät in den Regelalgorithmus einbezogen werden, wobei diese Signale beispielsweise über ein CAN oder LIN übertragen werden können.

Da erfindungsgemäß grundsätzlich sowohl die Steuerung oder Regelung der Chassis-Luftfederungsanlage 2 als auch der Kabinen-Luftfederungsanlage 3 durch ein einziges Steuergerät erfolgt, ist kein Einlesen, Berechnung und Versenden der Signale zwischen mehreren Steuergeräten erforderlich, womit die Schnelligkeit der Steuerung oder Regelung erhöht werden kann.

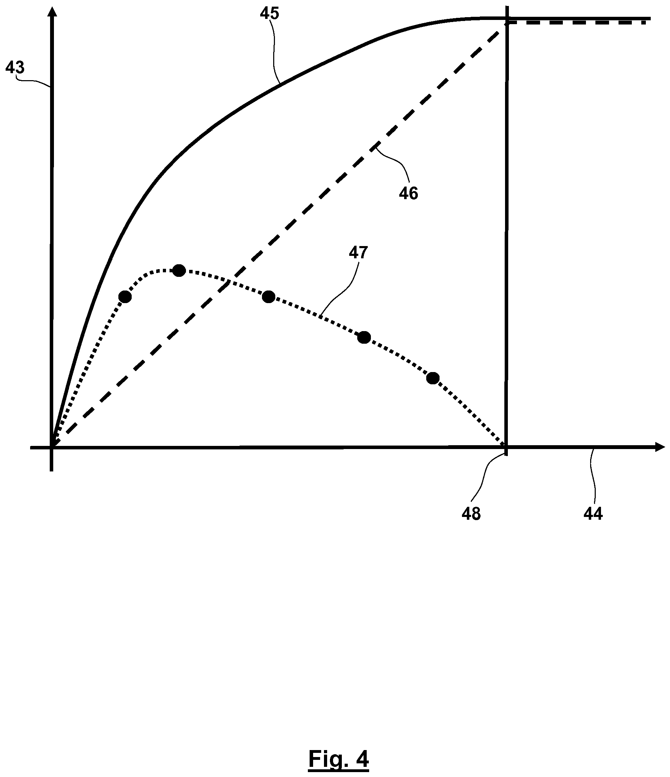

In **Fig. 4** ist stark vereinfacht und lediglich beispielhaft ein erfindungsgemäßes Verfahren dargestellt. Hierbei ist ein Niveau 43 der Kabine als Funktion der Zeit 44 dargestellt während des Durchfahrens einer Bodensenke. Hierbei kennzeichnet die durchgezogene Linie 45 eine ideale Niveauänderung des Niveaus der Kabine, für welche trotz Einfahrens in die Bodensenke die Kabine ihre absolute Höhe nicht ändern würde. Zu erkennen ist, dass zum Ausgleich der Absenkung der Fahrbahn im Bereich der Bodensenke das Niveau ansteigen muss. Mit der gestrichelten Linie 46 ist die Änderung des Niveaus des Chassis dargestellt, welche bei gleichzeitiger Belüftung sämtlicher Luftfederbälge 5 herbeigeführt werden kann. Infolge der Drosselwirkungen in den Magnetventilen und den Leitungen ist die Änderungsgeschwindigkeit des Niveaus endlich. In Fig. 4 ist zu erkennen, dass die Linie 46 infolge dieser Drosselwirkungen nicht der Linie 45 folgen kann. Bei alleiniger Belüftung der Luftfederbälge 5 würde sich somit (bei Vernachlässigung von etwaigen Oszillationen) das Chassis und damit auch die Kabine beim Durchfahren der Bodensenke in einem Ausmaß absenken, welches der Differenz der Linien 45 und 46 entspricht. Erfindungsgemäß kann eine derartige unerwünschte Absenkung der Kabine mit dem Durchfahren der Bodensenke vermieden oder zumindest gemindert werden, indem gleichzeitig eine Belüftung der Luftfederbälge 18 der Kabine in einem Ausmaß erfolgt, dass die Kabine gegenüber dem Chassis gerade so weit angehoben wird, dass die Kabine trotz Durchfahrens der Bodensenke auf derselben Höhe bleibt. Die relative Niveauänderung der Kabine gegenüber dem Chassis ist mit der punktierten Linie 47 in Fig. 4 dargestellt. Die Belüftung der Luftfederbälge 18 wird dabei gerade so bemessen, dass die Summe der Niveauänderungen gemäß den Linien 46, 47 gerade der gesamten erforderlichen Niveauänderung gemäß Linie 45 entspricht. Zu erkennen ist in Fig. 4, dass die hilfsweise Beaufschlagung der Luftfederbälge 18 der Kabinen-Luftfederungsanlage 3 mit der Zeit reduziert wird, während mit zunehmender Druckbeaufschlagung der Kabinen-Luftfederungsanlage 3 das Niveau des Chassis entsprechend der Linie 46 immer weiter ansteigt. Zu einem Zeitpunkt 48 kann dann das relative Niveau zwischen Kabine und Fahrerkabine wieder dem anfänglichen relativen Niveau entsprechen, da dann das Niveau des Chassis gemäß Linie 46 der erforderlichen Niveauänderung 45 entspricht.

Die Darstellung der möglichen Koordinierung der Steuerungen oder Regelungen der Chassis-Luftfederungsanlage 2 sowie der Kabinen-Luftfederungsanlage 3 gemäß Fig. 4 ist zwecks Vereinfachung des Verständnisses stark vereinfacht. Tatsächlich ist für die Gestaltung des erfindungsgemäßen Verfahrens an einem Nutzfahrzeug eine komplexe Modellierung der Schwingungssysteme und der Einflussgrößen erforderlich, um auch dynamische Effekte in den unterschiedlichen Raumrichtungen berücksichtigen zu können.

### BEZUGSZEICHENLISTE

- 1: Druckluftanlage
- 2: Chassis-Luftfederungsanlage
- 3: Kabinen-Luftfederungsanlage
- 4: Behälter
- 5: Luftfederbalg Chassis
- 6: Dämpfer Chassis
- 7: Sensor Chassis
- 8: Drucksensor
- 9: Magnetventil
- 10: Magnetventil
- 11: Magnetventil
- 12: Zentralleitung
- 13: Entlüftung
- 14: Versorgungsleitung
- 15: Hinterachsleitung
- 16: Magnetventil
- 17: Drossel
- 18: Luftfederbalg Kabine
- 19: Dämpfer Kabine
- 20: Luftfeder-Dämpfer-Modul
- 21: Sensoren
- 22: Magnetventil
- 23: Magnetventil
- 24: Magnetventil
- 25: Magnetventil
- 26: Zentralleitung
- 27: Entlüftung
- 28: Versorgungsleitung
- 29: Drucksensor
- 30: Steuergerät
- 31: Bussystem
- 32: Steuergerät
- 33: Kabinen-Steuereinheit
- 34: Chassis-Steuereinheit
- 35: Vorderachs-Steuereinheit
- 36: Chassis-Steuereinheit
- 37: Hinterachs-Steuereinheit
- 38: Baueinheit
- 39: Steuergerät
- 40: Steuerleitung
- 41: Drucksensor
- 42: Chassis-Steuereinheit
- 43: Niveau Kabine
- 44: Zeit
- 45: Linie
- 46: Linie
- 47: Linie
- 48: Zeitpunkt

## Patentansprüche

1. Steuergerät (30) für eine Druckluftanlage (1) eines Nutzfahrzeugs mit
a) Steuerlogik zur Steuerung oder Regelung einer Chassis-Luftfederungsanlage (2) für eine Abstützung eines Chassis des Nutzfahrzeugs und
b) Steuerlogik zur Steuerung oder Regelung einer Kabinen-Luftfederungsanlage (3) für eine Abstützung einer Kabine des Nutzfahrzeugs gegenüber dem Chassis,
**dadurch gekennzeichnet, dass**
c) die Steuerungen oder Regelungen der Chassis-Luftfederungsanlage (2) und der Kabinen-Luftfederungsanlage (3) derart miteinander koordiniert sind, dass die Steuerungs- oder Regelungsmaßnahmen der Chassis-Luftfederungsanlage (2) einerseits und der Kabinen-Luftfederungsanlage (3) andererseits nicht unabhängig voneinander bestimmt werden, sondern vielmehr die Steuerungs- oder Regelungsmaßnahmen der Chassis-Luftfederungsanlage (2) einerseits und der Kabinen-Luftfederungsanlage (3) andererseits voneinander abhängig sind oder sich gegenseitig beeinflussen.

2. Steuergerät (30) nach Anspruch 1, **dadurch gekennzeichnet, dass** das Steuergerät (30) mit Steuerlogik zur Steuerung oder Regelung mindestens eines Dämpfers (6) des Chassis ausgestattet ist, wobei die Steuerung oder Regelung des mindestens einen Dämpfers (6) des Chassis mit den Steuerungen oder Regelungen der Chassis-Luftfederungsanlage (2) und der Kabinen-Luftfederungsanlage (3) koordiniert ist.

3. Steuergerät (30) nach Anspruch 1 oder 2, **dadurch gekennzeichnet, dass** das Steuergerät (30) mit Steuerlogik zur Steuerung oder Regelung mindestens eines Dämpfers (19) der Kabine ausgestattet ist, wobei die Steuerung oder Regelung des mindestens einen Dämpfers (19) der Kabine mit den Steuerungen oder Regelungen der Chassis-Luftfederungsanlage (2) und der Kabinen-Luftfederungsanlage (3) koordiniert ist.

4. Steuergerät (30) nach einem der vorhergehenden Ansprüche, **dadurch gekennzeichnet, dass** das Steuergerät (30) mit Steuerlogik zur Steuerung oder Regelung einer Abstützung eines in der Kabine angeordneten Sitzes ausgestattet ist, wobei die Steuerung der Abstützung des Sitzes mit den Steuerungen oder Regelungen der Chassis-Luftfederungsanlage (2) und der Kabinen-Luftfederungsanlage (3) koordiniert ist.

5. Steuergerät (30) nach einem der vorhergehenden Ansprüche, **dadurch gekennzeichnet, dass** das Steuergerät (30) gemeinsam mit
a) einer elektropneumatischen Kabinen-Steuereinheit (33) und/oder
b) einer elektropneumatischen Chassis-Steuereinheit (34)
eine Baueinheit (38) bildet.

6. Steuergerät (30) nach einem der vorhergehenden Ansprüche, **dadurch gekennzeichnet, dass** das Steuergerät (30) mindestens einen steuernden oder regelnden Ausgang für eine Kabinen-Luftfederungsanlage (3) und/oder eine Chassis-Luftfederungsanlage (2) besitzt.

7. Steuergerät (30) nach einem der vorhergehenden Ansprüche, **dadurch gekennzeichnet, dass** das Steuergerät (30) mit Steuerlogik zur Verarbeitung mindestens eines Eingangssignals
a) für ein Niveau oder eine Niveauänderungsgeschwindigkeit des Chassis,
b) für einen Druck oder eine Druckänderungsgeschwindigkeit eines Luftfederbalges (5) der Chassis-Luftfederungsanlage (2),
c) für einen Betriebsparameter eines Dämpfers (6) des Chassis,
d) für ein Niveau oder eine Niveauänderungsgeschwindigkeit der Kabine,
e) für einen Druck oder eine Druckänderungsgeschwindigkeit eines Luftfederbalges (18) der Kabinen-Luftfederungsanlage (3),
f) für einen Betriebsparameter eines Dämpfers (19) der Kabine,
g) für ein Signal eines anderen Steuergeräts (32),
h) für ein Signal eines Bussystems,
i) für einen Reifendruck,
j) für eine Bremskraft oder ein Bremssignals,
k) eines Navigationssystems oder eines Ortserkennungssystems,
l) für eine Geschwindigkeit des Nutzfahrzeugs,
m) für einen Lenkwinkel,
n) für eine aktuelle oder zukünftige Fahrbahnneigung,
o) für eine Beladung des Nutzfahrzeugs,
p) für ein Betriebssignal eines Anhängers oder Aufliegers,
q) eines Beschleunigungssensors, Gierratensensors, Rollsensors und/oder Nicksensors,
r) für ein Fahrergewicht,
s) bzgl. eines Schaltvorgangs,
t) bzgl. einer Bremspedalstellung und/oder Gaspedalstellungs- oder -änderungsgeschwindigkeit und/oder
u) bzgl. eines Retarders
ausgestattet ist.

8. Steuergerät (30) nach einem der vorhergehenden Ansprüche, **dadurch gekennzeichnet, dass** das Steuergerät (30) mit Steuerlogik zur automatischen Veränderung einer statischen oder mittleren Niveauhöhe des Chassis ausgestattet ist.

9. Steuergerät (30) nach einem der vorhergehenden Ansprüche, **dadurch gekennzeichnet, dass** das Steuergerät (30) mit Steuerlogik zur im Wesentlichen horizontalen Ausrichtung der Kabine in einer Parksituation ausgestattet ist.

10. Steuergerät (30) nach einem der vorhergehenden Ansprüche, **dadurch gekennzeichnet, dass** in der Steuerlogik des Steuergeräts (30) ein mechanisches Ersatzmodell der Massen, Federn und Dämpfern zur Berücksichtigung der mechanischen Kenngrößen
a) der Reifen,
b) der Reifenabstützung am Chassis und/oder der Abstützung einer Achse am Chassis,
c) der Abstützung der Fahrerkabine gegenüber dem Chassis und/oder
d) der Abstützung des Sitzes gegenüber der Fahrerkabine
oder ein sich aus einem derartigen mechanischen Ersatzmodell ergebendes Übertragungsverhalten berücksichtigt ist.

11. Druckluftanlage (1) eines Nutzfahrzeugs mit
a) einer Chassis-Luftfederungsanlage (2), welche ein elektropneumatisches Chassis-Steuereinheit (34) besitzt,
b) einer Kabinen-Luftfederungsanlage (3), welche ein elektropneumatisches Kabinen-Steuereinheit (33) besitzt, und
c) einem Steuergerät (30) nach einem der vorhergehenden Ansprüche, welches sowohl das elektropneumatische Chassis-Steuereinheit (34) als auch das elektropneumatische Kabinen-Steuereinheit (33) steuert und/oder regelt.

12. Verfahren zum Betrieb einer Druckluftanlage (1) eines Nutzfahrzeugs, welche über eine Chassis-Luftfederungsanlage (2) für eine Abstützung eines Chassis des Nutzfahrzeugs und eine Kabinen-Luftfederungsanlage (3) für eine Abstützung einer Kabine des Nutzfahrzeugs gegenüber dem Chassis verfügt, wobei durch ein einziges Steuergerät (30) sowohl die Chassis-Luftfederungsanlage (2) als auch die Kabinen-Luftfederungsanlage (3) gesteuert oder geregelt wird, **dadurch gekennzeichnet, dass** durch Steuerlogik des Steuergeräts (30) die Steuerungen oder Regelungen der Chassis-Luftfederungsanlage (2) und der Kabinen-Luftfederungsanlage (3) derart miteinander koordiniert werden, dass die Steuerungs- oder Regelungsmaßnahmen der Chassis-Luftfederungsanlage (2) einerseits und der Kabinen-Luftfederungsanlage (3) andererseits nicht unabhängig voneinander bestimmt werden, sondern vielmehr die Steuerungs- oder Regelungsmaßnahmen der Chassis-Luftfederungsanlage (2) einerseits und der Kabinen-Luftfederungsanlage (3) andererseits gegenseitig voneinander abhängen oder sich gegenseitig beeinflussen.

13. Verfahren nach Anspruch 12, **dadurch gekennzeichnet, dass** die Steuerungen oder Regelungen der Chassis-Luftfederungsanlage (2) und der Kabinen-Luftfederungsanlage (3) miteinander koordiniert werden, indem mit der Steuerlogik
a) eine Auswirkung der Steuerung oder Regelung der Chassis-Luftfederungsanlage (2) auf das zukünftige Bewegungsverhalten der Kabine ohne Steuerung oder Regelung der Kabinen-Luftfederungsanlage (3) prognostiziert wird und
b) eine Steuerung oder Regelung der Kabinen-Luftfederungsanlage (3) derart erfolgt, dass anstelle des prognostizierten Bewegungsverhaltens der Kabine ein Soll-Bewegungsverhalten herbeigeführt oder approximiert wird.

14. Verfahren nach Anspruch 12 oder 13, **dadurch gekennzeichnet, dass** die Steuerungen oder Regelungen der Chassis-Luftfederungsanlage (2) und der Kabinen-Luftfederungsanlage (3) miteinander koordiniert werden, indem mit der Steuerlogik die Steuerung oder Regelung der Chassis-Luftfederungsanlage (2) gegenläufig zu der Steuerung oder Regelung der Kabinen-Luftfederungsanlage (3) erfolgt.

15. Verfahren nach einem der Ansprüche 12 bis 14, **dadurch gekennzeichnet, dass** die Steuerungen oder Regelungen der Chassis-Luftfederungsanlage (2) und der Kabinen-Luftfederungsanlage (3) miteinander koordiniert werden, indem mit der Steuerlogik in einer Parksituation eine horizontale Ausrichtung der Kabine sowohl durch Veränderung der Beaufschlagung der Chassis-Luftfederungsanlage (2) als auch der Kabinen-Luftfederungsanlage (3) erfolgt.

16. Verfahren nach einem der Ansprüche 12 bis 15, **dadurch gekennzeichnet, dass** die Steuerungen oder Regelungen der Chassis-Luftfederungsanlage (2) und der Kabinen-Luftfederungsanlage (3) miteinander koordiniert werden, indem mit der Steuerlogik in einer Parksituation nach der Herbeiführung einer parallelen Ausrichtung der Kabine eine Dämpfung eines Dämpfers (6; 19) der Chassis-Luftfederungsanlage (2) und/oder der Kabinen-Luftfederungsanlage (3) erhöht oder maximiert wird.

17. Verfahren nach einem der Ansprüche 12 bis 16, **dadurch gekennzeichnet, dass** die Steuerungen oder Regelungen der Chassis-Luftfederungsanlage (2) und der Kabinen-Luftfederungsanlage (3) einen Druck in einem Behälter (4), über welchen die Chassis-Luftfederungsanlage (2) und/oder die Kabinen-Luftfederungsanlage (3) mit Druckluft versorgt werden, berücksichtigen.

## Claims

1. Control device (30) for a compressed air system (1) of a commercial vehicle with
a) control logic for controlling a body air suspension system (2) for supporting a body of the commercial vehicle and
b) control logic for controlling a cabin air suspension system (3) for supporting a cabin of the commercial vehicle at the body,
**characterized in that**
c) the controls of the body air suspension system (2) and the cabin air suspension system (3) are coordinated with each other in such a way that the control measures of the body air suspension system (2) on the one hand and of the cabin air suspension system (3) on the other hand are not determined independently on each other but instead the control measures of the body air suspension system (2) on the one hand and the cabin air suspension system (3) on the other hand depend on each other or influence each other.

2. Control device (30) of claim 1, **characterized in that** the control device (30) comprises control logic for controlling at least a damper (6) of the body, the control of the at least one damper (6) of the body being coordinated with the control of the body air suspension system (2) and the cabin air suspension system (3).

3. Control device (30) of claim 1 or 2, **characterized in that** the control device (30) comprises control logic for controlling at least a damper (19) of the cabin, the control of the at least one damper (19) of the cabin being coordinated with the controls of the body air suspension system (2) and the cabin air suspension system (3).

4. Control device (30) of one of the preceding claims, **characterized in that** the control device (30) comprises control logic for controlling a support of a seat arranged in the cabin, the control of the support of the seat being coordinated with the controls of the body air suspension system (2) and the cabin air suspension system (3).

5. Control device (30) of one of the preceding claims, **characterized in that** the control device (30) forms a constructional unit (38) together with
a) an electro-pneumatic cabin control unit (33) and/or
b) an electro-pneumatic body control unit (34).

6. Control device (30) of one of the preceding claims, **characterized in that** the control device (30) comprises at least one controlling outlet for a cabin air suspension system (3) and/or a body air suspension system (2).

7. Control device (30) of one of the preceding claims, **characterized in that** the control device (30) comprises control logic for processing at least one input signal
a) for a level or a velocity of a level change of the body,
b) for a pressure or a changing velocity of the pressure of an air suspension bellow (5) of the body air suspension system (2),
c) for an operating parameter of a damper (6) of the body,
d) for a level or a changing velocity of a level of the cabin,
e) for a pressure or a changing velocity of a pressure of an air suspension bellow (18) of the cabin air suspension system (3),
f) for an operating parameter of a damper (19) of the cabin,
g) for a signal of another control device (32),
h) for a signal of a bus system,
i) for a tire pressure,
j) for a brake force or a brake signal,
k) of a navigation system or a system for determining a position,
l) for a velocity of the commercial vehicle,
m) for a steering angle,
n) for an actual or future inclination of the road,
o) for a load of the commercial vehicle,
p) for an operating signal of a trailer or semitrailer,
q) of an acceleration sensor, yaw angle sensor, a rolling angle sensor and/or pitch sensor,
r) for a weight of the driver,
s) related to a shifting process,
t) related to a brake pedal position and/or throttle pedal position or a changing velocity of the throttle pedal and/or
u) related to a retarder.

8. Control device (30) of one of the preceding claims, **characterized in that** the control device (30) comprises control logic for the automatic change of a static or middle level heights of the body.

9. Control device (30) of one of the preceding claims, **characterized in that** the control device (30) comprises control logic for providing a substantially horizontal alignment of the cabin in a parking situation.

10. Control device (30) of one of the preceding claims, **characterized in that** a mechanical analogous model of the masses, springs and dampers for considering the mechanical parameters of
a) the tires,
b) the support of the tires at the body and/or the support of an axle at the body,
c) the support of the driver's cabin at the body and/or
d) the support of the seat against the driver's cabin
or a transfer characteristic resulting from a mechanical analogous model of this type is considered in the control logic of the control device (30).

11. Pressurized air system (1) of a commercial vehicle with
a) a body air suspension system (2) which comprises an electro-pneumatic body control unit (34),
b) a cabin air suspension system (3) which comprises an electro-pneumatic cabin control unit (33) and
c) a control device (30) according to one of the preceding claims which controls both the electro-pneumatic body control unit (34) as well as the electro-pneumatic cabin control unit (33).

12. Method for operating a compressed air system (1) of a commercial vehicle which comprises a body air suspension system (2) for supporting a body of the commercial vehicle and a cabin air suspension system (3) for supporting a cabin of the commercial vehicle against the body, both the body air suspension system (2) as well as the cabin air suspension system (3) being controlled by one single control device (30), **characterized in that** by control logic of the control device (30) the controls of the body air suspension system (2) and the cabin air suspension system (3) are coordinated with each other in such a way that the control measures of the body air suspension system (2) on the one hand and the cabin air suspension system (3) on the other hand are not determined independently on each other but instead the control measures of the body air suspension system (2) on the one hand and the cabin air suspension system (3) on the other hand mutually depend on each other or influence each other.

13. Method of claim 12, **characterized in that** the controls of the body air suspension system (2) and the cabin air suspension system (3) are coordinated with each other by the control logic
a) predicting an effect of the control of the body air suspension system (2) on the future movement behaviour of the cabin without a control of the cabin air suspension system (3) and
b) controlling the cabin air suspension system (3) in such a way that instead of the predicted movement behavior of the cabin a desired movement behavior is achieved or approximated.

14. Method of claim 12 or 13, **characterized in that** the controls of the body air suspension system (2) and the cabin air suspension system (3) are coordinated with each other by the control logic controlling the body air suspension system (2) in opposite direction to the control of the cabin air suspension system (3).

15. Method of one of claims 12 to 14, **characterized in that** the controls of the body air suspension system (2) and the cabin air suspension system (3) are coordinated with each other by the control logic in a parking situation achieving the horizontal alignment of the cabin both by a change of the bias of the body air suspension system (2) as well as of the bias of the cabin air suspension system (3).

16. Method of one of claims 12 to 15, **characterized in that** the controls of the body air suspension system (2) and the cabin air suspension system (3) are coordinated with each other by the control logic in a parking situation after the achievement of a parallel alignment of the cabin increasing or maximizing a damping of a damper (6; 19) of the body air suspension system (2) and/or the cabin air suspension system (3).

17. Method of one of claims 12 to 16, **characterized in that** the controls of the body air suspension system (2) and the cabin air suspension system (3) consider a pressure in a reservoir (4) by which the body air suspension system (2) and/or the cabin air suspension system (3) are/is supplied with compressed air.

## Revendications

1. Appareil de commande (30) pour une installation d'air comprimé (1) d'un véhicule utilitaire avec
a) une logique de commande pour la commande ou la régulation d'une installation d'amortissement pneumatique d'un châssis (2) pour l'appui d'un châssis du véhicule utilitaire et
b) une logique de commande pour la commande ou la régulation d'une installation d'amortissement pneumatique d'une cabine (3) pour l'appui d'une cabine du véhicule utilitaire par rapport au châssis,
**caractérisé en ce que**
c) les commandes ou régulation de l'installation d'amortissement pneumatique du châssis (2) et de l'installation d'amortissement pneumatique de la cabine (3) sont coordonnées entre elles de façon à ce que les mesures de commande ou de régulation de l'installation d'amortissement pneumatique d'un châssis (2) d'une part et de l'installation d'amortissement pneumatique de la cabine (3) d'autre part ne soient pas déterminées indépendamment entre elles mais de façon à ce que les mesures de commande ou de régulation de l'installation d'amortissement pneumatique d'un châssis (2) d'une part et de l'installation d'amortissement pneumatique de la cabine (3) d'autre part soient dépendantes entre elles ou s'influencent mutuellement.

2. Appareil de commande (30) selon la revendication 1, **caractérisé en ce que** l'appareil de commande (30) est muni d'une logique de commande pour la commande ou la régulation d'au moins un amortisseur (6) du châssis, la commande ou la régulation de l'au moins un amortisseur (6) du châssis étant coordonnée avec les commandes ou régulations de l'installation d'amortissement pneumatique du châssis (2) et de l'installation d'amortissement pneumatique de la cabine (3).

3. Appareil de commande (30) selon la revendication 1 ou 2, **caractérisé en ce que** l'appareil de commande (30) est muni d'une logique de commande pour la commande ou la régulation d'au moins un amortisseur (19) de la cabine, la commande ou la régulation de l'au moins un amortisseur (19) de la cabine étant coordonnée avec les commandes ou régulations de l'installation d'amortissement pneumatique du châssis (2) et de l'installation d'amortissement pneumatique de la cabine (3).

4. Appareil de commande (30) selon l'une des revendications précédentes, **caractérisé en ce que** l'appareil de commande (30) est muni d'une logique de commande pour la commande ou la régulation d'un appui d'un siège disposé dans la cabine, la commande de l'appui du siège étant coordonnée avec les commandes ou régulations de l'installation d'amortissement pneumatique du châssis (2) et de l'installation d'amortissement pneumatique de la cabine (3).

5. Appareil de commande (30) selon l'une des revendications précédentes, **caractérisé en ce que** l'appareil de commande (30) constitue, avec
a) une unité de commande électropneumatique de cabine (33) et/ou
b) une unité de commande électropneumatique de châssis (34),
une unité modulaire (38).

6. Appareil de commande (30) selon l'une des revendications précédentes, **caractérisé en ce que** l'appareil de commande (30) comprend au moins une sortie de commande ou de régulation pour une installation d'amortissement pneumatique de cabine (3) et/ou une installation d'amortissement pneumatique de châssis (2).

7. Appareil de commande (30) selon l'une des revendications précédentes, **caractérisé en ce que** l'appareil de commande (30) est muni d'une logique de commande pour le traitement d'au moins un signal d'entrée
a) pour un niveau ou une vitesse de variation de niveau du châssis,
b) pour une pression ou une vitesse de variation de pression d'un soufflet d'amortissement pneumatique (5) de l'installation d'amortissement pneumatique du châssis (2),
c) pour un paramètre de fonctionnement d'un amortisseur (6) du châssis,
d) pour un niveau ou une vitesse de variation de niveau de la cabine,
e) pour une pression ou une vitesse de variation de pression d'un soufflet d'amortissement pneumatique (18) de l'installation d'amortissement pneumatique de la cabine (3),
f) pour un paramètre de fonctionnement d'un amortisseur (19) de la cabine,
g) pour un signal d'un autre appareil de commande (32),
h) pour un signal d'un système de bus,
i) pour une pression des pneus,
j) pour une force de freinage ou un signal de freinage,
k) d'un système de navigation ou d'un système de localisation,
l) pour une vitesse du véhicule utilitaire,
m) pour un angle de direction,
n) pour une inclinaison actuelle ou future de la trajectoire,
o) pour une charge du véhicule utilitaire,
p) pour un signal de fonctionnement d'une remorque ou d'une semi-remorque,
q) d'un capteur d'accélération, d'un capteur de lacet, d'un capteur de roulis et/ou d'un capteur de tangage,
r) pour un poids du conducteur,
s) concernant un processus de commutation,
t) concernant une position de la pédale de freinage ou une vitesse de variation de la position de la pédale de freinage et/ou une position de la pédale d'accélération ou une vitesse de variation de la position de la pédale d'accélération et/ou
u) concernant un retardateur.

8. Appareil de commande (30) selon l'une des revendications précédentes, **caractérisé en ce que** l'appareil de commande (30) est muni d'une logique de commande pour la modification automatique d'un niveau statique ou moyen du châssis.

9. Appareil de commande (30) selon l'une des revendications précédentes, **caractérisé en ce que** l'appareil de commande (30) est muni d'une logique de commande pour l'orientation globalement horizontale de la cabine dans une situation de stationnement.

10. Appareil de commande (30) selon l'une des revendications précédentes, **caractérisé en ce que**, dans la logique de commande de l'appareil de commande (30), un modèle de remplacement mécanique des masses, ressorts, et amortisseurs, pour la prise en compte des grandeurs mécaniques caractéristiques
a) des pneus,
b) de l'appui des pneus contre le châssis et/ou de l'appui d'un essieu contre le châssis,
c) de l'appui de la cabine du conducteur par rapport au châssis et/ou
d) de l'appui du siège par rapport à la cabine du conducteur ou un comportement de transmission permettant d'obtenir un tel modèle de remplacement mécanique est pris en compte.

11. Installation d'air comprimé (1) d'un véhicule utilitaire avec
a) une installation d'amortissement pneumatique de châssis (2), qui comprend une unité de commande électropneumatique de châssis (34),
b) une installation d'amortissement pneumatique de cabine (3) qui comprend une unité de commande électropneumatique de cabine (33) et
c) un appareil de commande (30) selon l'une des revendications précédentes, qui commande et/ou régule aussi bien l'unité de commande électropneumatique de châssis (34) que l'unité de commande électropneumatique de cabine (33).

12. Procédé d'exploitation d'une installation d'air comprimé (1) d'un véhicule utilitaire qui disposé d'une installation d'amortissement pneumatique de châssis (2) pour un appui d'un châssis du véhicule utilitaire et d'une installation d'amortissement pneumatique de cabine (3) pour un appui d'une cabine du véhicule utilitaire par rapport au châssis, un seul appareil de commande (30) commandant ou régulant aussi bien l'installation d'amortissement pneumatique de châssis (2) que l'installation d'amortissement pneumatique de cabine (3), **caractérisé en ce que** la logique de commande de l'appareil de commande (30) coordonne les commandes ou régulations de l'installation d'amortissement pneumatique de châssis (2) et de l'installation d'amortissement pneumatique de cabine (3) entre elles de façon à ce que les mesures de commande ou de régulation de l'installation d'amortissement pneumatique de châssis (2) d'une part et de l'installation d'amortissement pneumatique de cabine (3) d'autre part ne soient pas déterminées indépendamment entre elles mais de façon à ce que les mesures de commande ou de régulation de l'installation d'amortissement pneumatique d'un châssis (2) d'une part et de l'installation d'amortissement pneumatique de la cabine (3) d'autre part soient dépendantes entre elles ou s'influencent mutuellement.

13. Procédé selon la revendication 12, **caractérisé en ce que** les commande ou régulations de l'installation d'amortissement pneumatique de châssis (2) et de l'installation d'amortissement pneumatique de cabine (3) sont coordonnées entre elles grâce au fait que la logique de commande
a) permet de pronostiquer l'effet de la commande ou de la régulation de l'installation d'amortissement pneumatique de châssis (2) sur le comportement de mouvement futur de la cabine sans commande ou régulation de l'installation d'amortissement pneumatique de cabine (3) et
b) permet de faire en sorte qu'une commande ou régulation de l'installation d'amortissement pneumatique de cabine (3) ait lieu de façon à ce que, au lieu du comportement de mouvement pronostiqué de la cabine, un comportement de mouvement de consigne soit déduit ou approximé.

14. Procédé selon la revendication 12 ou 13, **caractérisé en ce que** les commandes ou régulations de l'installation d'amortissement pneumatique de châssis (2) et de l'installation d'amortissement pneumatique de cabine (3) sont coordonnées entre elles grâce au fait que la logique de commande permet la commande ou la régulation de l'installation d'amortissement pneumatique de châssis (2) à contre-sens de la commande ou la régulation de l'installation d'amortissement pneumatique de cabine (3).

15. Procédé selon l'une des revendications 12 à 14, **caractérisé en ce que** les commandes ou régulations de l'installation d'amortissement pneumatique de châssis (2) et de l'installation d'amortissement pneumatique de cabine (3) sont coordonnées entre elles grâce au fait que la logique de commande permet, dans une situation de stationnement, une orientation horizontale de la cabine par la modification aussi bien de l'alimentation de l'installation d'amortissement pneumatique de châssis (2) que de celle de l'installation d'amortissement pneumatique de cabine (3).

16. Procédé selon l'une des revendications 12 à 15, **caractérisé en ce que** les commandes ou régulations de l'installation d'amortissement pneumatique de châssis (2) et de l'installation d'amortissement pneumatique de cabine (3) sont coordonnées entre elles grâce au fait que la logique de commande permet, dans une situation de stationnement, après la réalisation d'une orientation parallèle de la cabine, d'augmenter ou de maximiser un amortissement d'un amortisseur (6; 19) de l'installation d'amortissement pneumatique de châssis (2) et/ou de l'installation d'amortissement pneumatique de cabine (3).

17. Procédé selon l'une des revendications 12 à 16, **caractérisé en ce que** les commandes ou régulations de l'installation d'amortissement pneumatique de châssis (2) et de l'installation d'amortissement pneumatique de cabine (3) prennent en compte une pression dans un réservoir (4), par l'intermédiaire de laquelle l'installation d'amortissement pneumatique de châssis (2) et/ou l'installation d'amortissement pneumatique de cabine (3) sont alimentées en air comprimé.
